# EUROPEAN PATENT SPECIFICATION

(11) **EP 2 542 631 B1**
(45) Date of publication and mention of the grant of the patent: **02.11.2016**
(21) Application number: 11750857.2
(22) Date of filing: 02.03.2011
(51) Int. Cl.: C09D 11/00, B41J 2/01, B41M 5/00

(54) **INKJET RECORDING INK SET, INKJET RECORDING METHOD AND RECORDED MATTER**
TINTENSET ZUR TINTENSTRAHLAUFZEICHNUNG, TINTENSTRAHLAUFZEICHNUNGSVERFAHREN UND AUFGEZEICHNETES MATERIAL
ENSEMBLE D'ENCRES D'IMPRESSION JET D'ENCRE, PROCÉDÉ D'IMPRESSION JET D'ENCRE ET MATIÈRE IMPRIMÉE

(30) Priority: 04.03.2010 JP 2010047995
(43) Date of publication of application: 09.01.2013
(73) Proprietor: Ricoh Company, Ltd., Tokyo 143-8555 (JP)
(72) Inventor: MATSUYAMA, Akihiko, Tokyo 143-8555 (JP); BANNAI, Akiko, Tokyo 143-8555 (JP); NAGAI, Kiyofumi, Tokyo 143-8555 (JP)
(74) Representative: Lamb, Martin John Carstairs
(86) International application number: PCT/JP2011/055435
(87) International publication number: WO 2011/108756

(56) References cited:
- EP-A1- 0 947 567
- EP-A1- 1 153 991
- EP-A2- 0 588 316
- JP-A- 2001 214 089
- JP-A- 2003 334 940
- JP-A- 2004 083 893
- JP-A- 2009 221 326

## Description

### Technical Field

The present invention relates to an inkjet recording ink set capable of achieving a favorable balance between improvement in the quality of a printed image and improvement in ejection stability when an inkjet printer is used, an inkjet recording method, and a recorded matter.

### Background Art

Inkjet printers have become remarkably popular for their advantages such as low noise and low running costs, and color printers which enable printing onto plain paper have also been actively put on the market. However, it is very difficult for these printers to satisfy all required properties such as color reproducibility of images, friction resistance, durability, light resistance, dryability of images, prevention of bleeding of letters/characters (prevention of feathering), prevention of bleeding at color boundaries (prevention of color bleeding), suitability for double-sided printing and ejection stability, and thus ink selection is made in view of properties that are given priority according to the intended use.

A typical ink used for inkjet recording includes water as a main component, and also includes a colorant, and a wetting agent (such as glycerin) that is used for the purpose of preventing clogging, etc. As colorants, dyes and pigments are primarily used. Dyes are superior in terms of stability of inks but tend to be inferior in terms of light resistance, gas resistance, water resistance, etc. Meanwhile, pigments are superior in terms of light resistance, gas resistance and water resistance but tend to be inferior in terms of stability of inks. Also, dye color inks are meritorious in that they are superior to pigment inks in terms of color forming capability; however, there is a problem in which dye black inks are inferior to pigment inks containing carbon black in terms of image density.

Use of color dye inks and a black pigment ink makes it possible to realize an ink set provided both with capability of forming vivid color, which is derived from the color inks, and with high image density derived from the black ink.

However, the dye inks easily bleed on paper such as plain paper, whereas the pigment ink does not easily spread on paper, thereby causing a problem of occurrence of running (color bleeding) at boundaries between the black ink and the color inks. As a method of solving the problem of color bleeding, there is a method of reducing the difference in permeability between the black ink and the color inks and thus making it difficult for the black ink and the color inks to permeate into each other's areas on an image; here, since the permeability of the dye-containing color inks is greater, the permeability of the pigment-containing black ink is increased.

As a method for increasing the permeability, there is a method of changing the manner in which the pigment ink is dispersed; commonly used inks include an ink obtained by forming a pigment into fine particles with the use of a dispersant, an ink formed into fine particles by addition of a hydrophilic group to a pigment surface, and an ink formed into fine particles with a pigment surface coated with a polymer.

The ink obtained by forming a pigment into fine particles with the use of a dispersant exhibits high permeability as a pigment ink; accordingly, by decreasing the surface tension of the ink, for example with addition of a surfactant, it is possible to achieve a favorable balance of permeation between the ink and dye containing color inks and also to solve the problem of color bleeding. However, due to the high permeability of the pigment ink, the pigment easily permeates into fibers of paper, thereby making it difficult to obtain sufficient image density; also, since the dispersant easily detaches from the pigment surface, the stability of the ink is problematic.

For example, use of an ink set composed of color inks that contain dyes of specific structures, and carbon black with a resin serving as a dispersant, in a method for forming an inkjet color image with improved fastness, has been proposed (refer to PTL 1). However, in the case where a resin is used simply as a dispersant, there is a problem in which the black image density is insufficient and the storage stability is poor.

Meanwhile, to improve black color density and fixability, there has, for example, been proposed an image forming method including a step of forming a black image by attaching droplets of a pigment-based black ink and color dye-based color inks such that these droplets mix on a recording material (refer to PTL 2). More specifically, PTL 2 relates to an ink set including color dyes that are 4 or less in pH value and carbon black dispersed with a resin, wherein the color inks and the black ink are made different in pH value and reacted together so as to suppress color bleeding. However, there is a problem in which the black image density is insufficient and the storage stability is poor.

The ink formed into fine particles by addition of a hydrophilic group to a pigment surface also exhibits high permeability as a pigment ink; accordingly, by decreasing the surface tension of the ink, for example with addition of a surfactant, it is possible to achieve a favorable balance of permeation between the ink and dye-containing color inks and also to solve the problem of color bleeding. However, since the ink has high permeability as do the above-mentioned pigment particles with the dispersed dispersant, there is a problem in which sufficient image density is difficult to obtain.

As an ink set capable of reducing color bleeding and securing favorable color reproducibility, there has, for example, been proposed an ink set including color inks that contain respective color dyes and a black ink that contains a black pigment (carbon black, to the surface of which a hydrophilic group is added) (refer to PTL 3). In this case, however, there is a problem of insufficient black image density.

Meanwhile, regarding the ink formed into fine particles with a pigment surface coated with a polymer, pigment particles themselves have lower permeability; therefore, even if the surface tension is reduced, for example by addition of a fluorochemical surfactant or a silicone-based surfactant, it is difficult to achieve a favorable balance of permeation between the ink and dye inks whose surface tension has been reduced, for example by addition of a surfactant, and so the problem of color bleeding remains unsolved. Nevertheless, the ink is advantageous in that high image density can be obtained and its stability as an ink is high.

Further, there is a method of suppressing permeability of an ink by increasing its viscosity. However, there is an upper limit on the viscosity at which the ink can be stably ejected by means of ink jetting, so that adequate effects have not yet been obtained in reality.

### Citation List

### Patent Literature

PTL 1 Japanese Patent Application Laid-Open (JP-A) No. 06-099656
PTL2 Japanese Patent (JP-B) No. 3204761
PTL3 JP-A No. 2003-334940

### Summary of Invention

### Technical Problem

An object of the present invention is to provide: an inkjet recording ink set with high ejection reliability and superior image quality, which is a set including at least color inks (aqueous inks) that contain respective dyes as color materials of cyan, magenta and yellow, and a black ink (aqueous ink) that contains carbon black, and which prevents bleeding between the black ink and the color inks; an inkjet recording method using the ink set; and a recorded matter obtained using the ink set.

### Solution to Problem

Means for solving the problems are as follows.
<1> An inkjet recording ink set including: a black ink; and color inks composed of a cyan ink, a magenta ink and a yellow ink, wherein the black ink contains at least a water-soluble solvent, a surfactant, water, and colored polymer emulsion particles obtained by dispersing, in water, carbon black coated with a vinyl polymer or a polyester polymer, wherein the cyan ink, the magenta ink and the yellow ink each contain at least a corresponding color dye, a water-soluble solvent, and water, and wherein an amount S of the water-soluble solvent contained in each color ink occupies 40% by mass or more of a total amount of each color ink, a ratio of the amount S of the water-soluble solvent to an amount W of the water contained in each color ink, represented by S/W, is in the range of 0.7 to 1.6, and each color ink does not have a flash point in a measurement according to JIS-K2265 based upon the Cleveland open cup method.
<2> The inkjet recording ink set according to <1>, wherein the cyan ink, the magenta ink and the yellow ink each have a viscosity of 5 mPa·s to 20 mPa·s at 25°C and a static surface tension of 35 mN/m to 45 mN/m at 25°C, and wherein the black ink has a viscosity of 5 mPa·s to 20 mPa·s at 25°C and a static surface tension of 20 mN/m to 30 mN/m at 25°C.
<3> The inkjet recording ink set according to <1> or <2>, wherein the color dye contained in the yellow ink is a compound represented by General Formula (1) or (2) below, 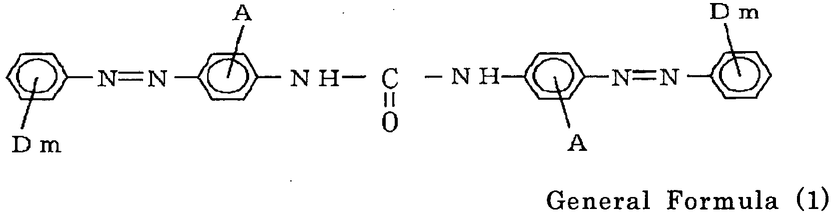 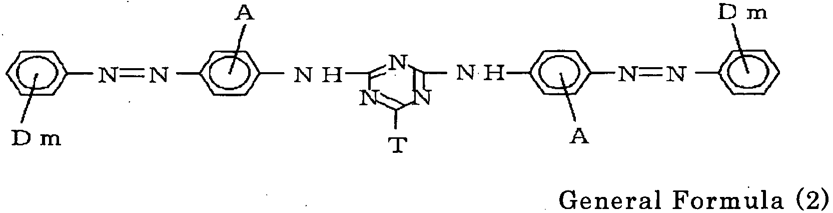 where A denotes at least one selected from the group consisting of a hydrogen atom, a C1-C2 alkyl group and a C1-C2 alkoxy group; T denotes a C1-C3 alkanolamino group or a hydroxyl group; D denotes -COOM or -SO₃M, with M denoting an alkali metal, a quaternary ammonium, a quaternary phosphonium or a C1-C3 alkanolamine; and m denotes 0, 1, 2 or 3.
<4> The inkjet recording ink set according to any one of <1> to <3>, wherein the color dye contained in the magenta ink is a compound represented by General Formula (3) below, 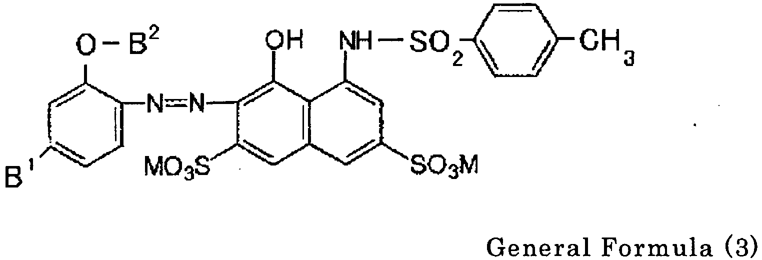 where B¹ and B² each denote at least one selected from the group consisting of a hydrogen atom, a phenyl group, a fluorine atom, a halogen atom and a hydroxyl group; M denotes an alkali metal, a quaternary ammonium, a quaternary phosphonium or a C1-C3 alkanolamine.
<5> The inkjet recording ink set according to any one of <1> to <4>, wherein the color dye contained in the cyan ink is a compound represented by General Formula (4) below, 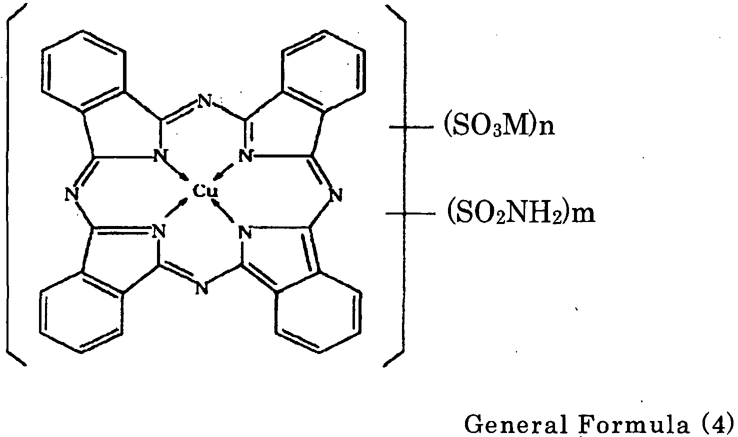 where M denotes an alkali metal, a quaternary ammonium, a quaternary phosphonium or an alkanolamine; m denotes 0, 1, 2 or 3; and n denotes 1, 2, 3 or 4.
<6> An inkjet recording method including: applying a stimulus to each ink of the inkjet recording ink set according to any one of <1> to <5> and flying each ink so as to record an image.
<7> A recorded matter including: a recording medium; and an image formed on the recording medium, using the inks of the inkjet recording ink set according to any one of <1> to <5>.

### Advantageous Effects of Invention

The present invention makes it possible to solve the problems in related art and achieve the object of providing: an inkjet recording ink set with high ejection reliability and superior image quality, which is a set including at least color inks (aqueous inks) that contain respective dyes as color materials of cyan, magenta and yellow and a black ink (aqueous ink) that contains carbon black, and which prevents bleeding between the black ink and the color inks; an inkjet recording method using the ink set; and a recorded matter obtained using the ink set.

### Brief Description of Drawings

FIG. 1 is an explanatory perspective view showing an inkjet recording apparatus, with a cover of an ink cartridge loading section being left open.
FIG. 2 is a schematic structural drawing for explaining the overall structure of the inkjet recording apparatus.

### Description of Embodiments

An inkjet recording ink set of the present invention is an inkjet recording ink set including: a black ink; and color inks composed of a cyan ink, a magenta ink and a yellow ink, wherein the black ink contains at least a water-soluble solvent, a surfactant, water, and colored polymer emulsion particles obtained by dispersing, in water, carbon black coated with a vinyl polymer or a polyester polymer, wherein the cyan ink, the magenta ink and the yellow ink each contain at least a corresponding color dye, a water-soluble solvent, and water, and wherein an amount S of the water-soluble solvent contained in each color ink occupies 40% by mass or more of a total amount of each color ink, a ratio of the amount S of the water-soluble solvent to an amount W of the water contained in each color ink, represented by S/W, is in the range of 0.7 to 1.6, and each color ink does not have a flash point in a measurement according to JIS-K2265 based upon the Cleveland open cup method.

Note that the term "water-soluble solvent" will sometimes be expressed as "wetting agent" in explanations below.

As a component of the black ink used in the inkjet ink set of the present invention, colored polymer emulsion particles are used. These colored polymer emulsion particles are obtained by dispersing, in water, carbon black coated with a vinyl polymer or a polyester polymer. Since the carbon black is coated with the polymer, the colored polymer emulsion particles are superior in ink storage stability and image stability. Note that since the permeability of the carbon black itself is low, a surfactant is added as an ink component so as to improve permeability.

By using a compound with a high boiling point and low volatility, such as in the after-mentioned specific examples, for the water-soluble solvent (wetting agent) added to each of the color inks (the cyan ink, the magenta ink and the yellow ink) included in the inkjet recording ink set, the color inks themselves have no flash point (as measured according to JIS-K2265 based upon the Cleveland open cup method) even with the solvent content prescribed in the present application and thus do not easily dry; therefore, ejection of the inks from inkjet nozzles is hardly disturbed.

Further, besides being given favorable permeability derived from the corresponding dye, each color ink is given extra permeability by making the amount (amount S) of the water-soluble solvent similar to the amount (amount W) of the water, namely by adjusting the ratio (S/W) of the amount S to the amount W to the range of 0.7 to 1.6 (0.7≤S/W≤1.6). Therefore, it is possible to secure a favorable balance between the black ink and the color inks.

As a result, the black ink with low surface tension does not permeate the color inks with high surface tension, and thus the problem of color bleeding can be solved.

It is preferred that the color inks, i.e., the cyan ink, the magenta ink and the yellow ink, in the present invention each have a viscosity of 5 mPa·s to 20 mPa·s at 25°C and a static surface tension of 35 mN/m to 45 mN/m at 25°C. Meanwhile, it is preferred that the black ink have a viscosity of 5 mPa·s to 20 mPa·s at 25°C and a static surface tension of 20 mN/m to 30 mN/m at 25°C.

When the viscosities of the color inks and the black ink are so low as to be outside the above-mentioned ranges, their fluidity increases and thus color bleeding may worsen. When the viscosities of the color inks and the black ink are so high as to be outside the above-mentioned ranges, the stability of their ejection from inkjet nozzles degrades and thus mist, attachment of the inks to incorrect positions, etc. may arise, leading to poor image quality.

When the surface tensions of the color inks and the black ink are so low as to be outside the above-mentioned ranges, the black ink easily invades the color inks and thus color bleeding may worsen. When the surface tensions of the color inks and the black ink are so high as to be outside the above-mentioned ranges, conversely the color inks easily invade the black ink and thus color bleeding may worsen.

The following specifically explains components included in the color inks and the black ink.

The cyan ink, the magenta ink and the yellow ink, used for the inkjet recording ink set, each contain a corresponding color dye (hereinafter referred to also as "dye" for short).

As the dyes for use in the present invention, water-soluble dyes such as a direct dye, an acid dye, a basic dye and a reactive dye are preferable.

Specific examples of such dyes include, but are not limited to, the following.

Specific examples of the direct dye include: C.I. Direct Red 2, 4, 9, 23, 26, 31, 39, 62, 63, 72, 75, 76, 79, 80, 81, 83, 84, 89, 92, 95, 111, 173, 184, 207, 211, 212, 214, 218, 221, 223, 224, 225, 226, 227, 232, 233, 240, 241, 242, 243 and 247;
C.I. Direct Violet 7, 9, 47, 48, 51, 66, 90, 93, 94, 95, 98, 100 and 101;
C.I. Direct Yellow 8, 9, 11, 12, 27, 28, 29, 33, 35, 39, 41, 44, 50, 53, 58, 59, 68, 86, 87, 93, 95, 96, 98, 100, 106, 108, 109, 110, 130, 132, 142, 144, 161 and 163; and
C.I. Direct Blue 1, 10, 15, 22, 25, 55, 67, 68, 71, 76, 77, 78, 80, 84, 86, 87, 90, 98, 106, 108, 109, 151, 156, 158, 159, 160, 168, 189, 192, 193, 194, 199, 200, 201, 202, 203, 207, 211, 213, 214, 218, 225, 229, 236, 237, 244, 248, 249, 251, 252, 264, 270, 280, 288, 289 and 291.

Specific examples of the acid dye include C.I. Acid Red 35, 42, 52, 57, 62, 80, 82, 111, 114, 118, 119, 127, 128, 131, 143, 151, 154, 158, 249, 254, 257, 261, 263, 266, 289, 299, 301, 305, 336, 337, 361, 396 and 397;
C.I. Acid Violet 5, 34, 43, 47, 48, 90, 103 and 126;
C.I. Acid Yellow 17, 19, 23, 25, 39, 40, 42, 44, 49, 50, 61, 64, 76, 79, 110, 127, 135, 143, 151, 159, 169, 174, 190, 195, 196, 197, 199, 218, 219, 222 and 227; and
C.I. Acid Blue 9, 25, 40, 41, 62, 72, 76, 78, 80, 82, 92, 106, 112, 113, 120, 127:1, 129, 138, 143, 175, 181, 205, 207, 220, 221, 230, 232, 247, 258, 260, 264, 271, 277, 278, 279, 280, 288, 290 and 326.

Specific examples of the basic dye include C.I. Basic Yellow 1, 2, 11, 13, 14, 15, 19, 21, 23, 24, 25, 28, 29, 32, 36, 40, 41, 45, 49, 51, 53, 63, 465, 67, 70, 73, 77, 87 and 91;
C.I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109 and 112;
C.I. Basic Violet 1, 3, 7, 10, 11 and 27; and
C.I. Basic Blue 1, 3, 5, 7, 9, 21, 22, 26, 35, 41, 45, 47, 54, 62, 65, 66, 67, 69, 75, 77, 78, 89, 92, 93, 105, 117, 120, 122, 124, 129, 137, 141, 147 and 155.

Specific examples of the reactive dye include C.I. Reactive Yellow 1, 2, 3, 5, 11, 13, 14, 15, 17, 18, 20, 21, 22, 23, 24, 25, 26, 27, 29, 35, 37, 40, 41, 42, 47, 51, 55, 65 and 67;
C.I. Reactive Red 1, 3, 13, 14, 17, 19, 21, 22, 23, 24, 25, 26, 29, 31, 32, 35, 37, 40, 41, 43, 44, 45, 46, 49, 55, 60, 66, 74, 79, 96, 97 and 180;
C.I. Reactive Violet 1, 3, 4, 5, 6, 7, 8, 9, 16, 17, 22, 23, 24, 26, 27, 33 and 34; and
C.I. Reactive Blue 1, 2, 3, 5, 7, 8, 10, 13, 14, 15, 17, 18, 19, 21, 23, 25, 26, 27, 28, 29, 32, 35, 38, 41, 63, 80 and 95.

In the present invention, examples of dyes suitably usable for the yellow ink include any compound represented by General Formula (1) or (2) below, and specific examples thereof include the one shown in Examples later described.

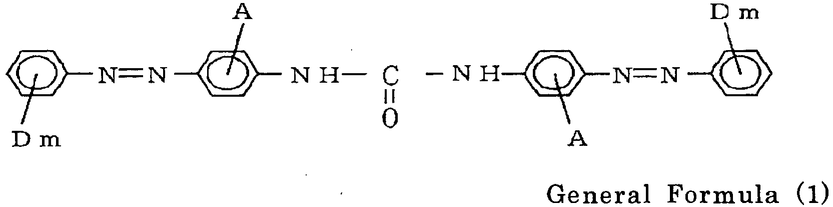

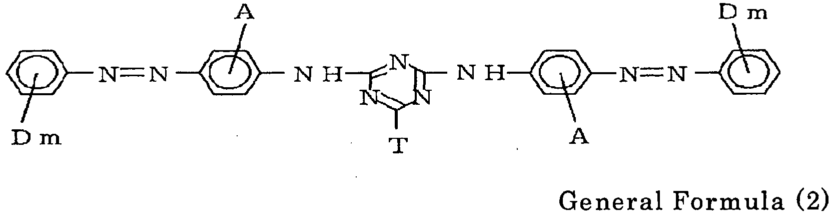

In General Formulae (1) and (2), A denotes at least one selected from the group consisting of a hydrogen atom, a C1-C2 alkyl group and a C1-C2 alkoxy group.

T denotes a C1-C3 alkanolamino group or a hydroxyl group. Examples of the C1-C3 alkanolamino group include a methanolamino group, an ethanolamino group and a butanolamino group.

D denotes -COOM or -SO₃M (M denotes an alkali metal, a quaternary ammonium, a quaternary phosphonium or a C1-C3 alkanolamine).

Examples of the alkali metal include Li, Na and K.

Examples of the quaternary ammonium include ammonium, tetramethylammonium and triethylmethylammonium.

Examples of the quaternary phosphonium include phosphonium and tetramethylphosphonium.

The letter m denotes 0, 1, 2 or 3.

In the present invention, examples of dyes suitably usable for the magenta ink include any compound represented by General Formula (3) below, and specific examples thereof include the one shown in Examples later described.

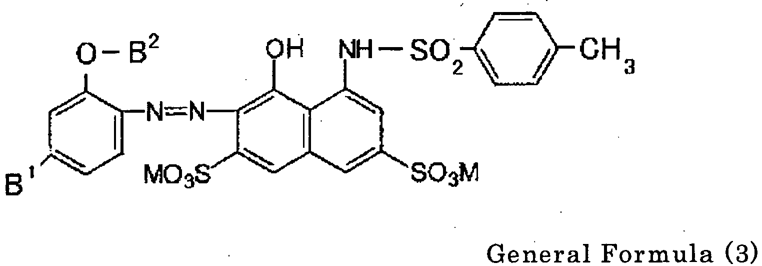

In General Formula (3), B¹ and B² each denote at least one selected from the group consisting of a hydrogen atom, a phenyl group, a fluorine atom, a halogen atom and a hydroxyl group.

M denotes an alkali metal, a quaternary ammonium, a quaternary phosphonium or a C1-C3 alkanolamine.

Examples of the alkali metal include Li, Na and K.

Examples of the quaternary ammonium include ammonium, tetramethylammonium and triethylmethylammonium.

Examples of the quaternary phosphonium include phosphonium and tetramethylphosphonium.

In the present invention, examples of dyes suitably usable for the cyan ink include any compound represented by General Formula (4) below, and specific examples thereof include the one shown in Examples later described.

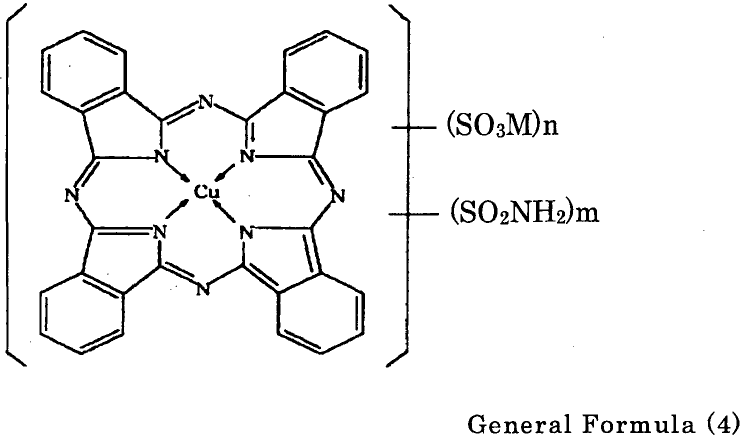

In General Formula (4), M denotes an alkali metal, a quaternary ammonium, a quaternary phosphonium or an alkanolamine.

Examples of the alkali metal include Li, Na and K.

Examples of the quaternary ammonium include ammonium, tetramethylammonium and triethylmethylammonium.

Examples of the quaternary phosphonium include phosphonium and tetramethylphosphonium.

The alkanolamine is preferably a C1-C3 alkanolamine.

The letter m denotes 0, 1, 2 or 3, and the letter n denotes 1, 2, 3 or 4.

### [Pigment]

The black ink included in the inkjet recording ink set of the present invention contains colored polymer emulsion particles obtained by dispersing carbon black coated with a vinyl polymer or a polyester polymer (polymer-coated pigment particles) in water. This means that carbon black is used as a color material of the black ink for use in the present invention.

Examples of pigments usable in the present invention as carbon blacks (C.I. Pigment Black 7) include furnace black, lamp black, acetylene black and channel black.

The colored polymer emulsion particles are obtained by dispersing in water a polymer-coated carbon black, namely polymer fine particles with a carbon black encapsulated therein. Here, it is not that all the pigment needs to be encapsulated or adsorbed but that the pigment may be dispersed in the emulsion to such an extent that the dispersion stability is not impaired.

Examples of polymers usable for the polymer-coated pigment particles include vinyl polymers, polyester polymers, polyurethane polymers, and the polymers disclosed in JP-A Nos. 2000-53897 and 2001-139849. In the present invention, use of a polyester polymer or a vinyl polymer among these is particularly preferable.

The following specifically explains the polyester polymer and the vinyl polymer.

### <Polyester Polymer>

The polyester polymer is composed of a polymerized product obtained by a condensation reaction using a polyvalent carboxylic acid and a polyhydric alcohol as starting materials.

Examples of the polyvalent carboxylic acid include aromatic dicarboxylic acids such as terephthalic acid, isophthalic acid, orthophthalic acid, 1,5-naphthalenedicarboxylic acid, 2,6-naphthalenedicarboxylic acid, diphenic acid, sulfoterephthalic acid, 5-sulfoisophthalic acid, hexahydrophthalic anhydride, 4-sulfophthalic acid, 4-sulfonaphthalene-2,7-dicarboxylic acid, 5-[4-sulfophenoxy]isophthalic acid and sulfoterephthalic acid; aliphatic dicarboxylic acids such as succinic acid, adipic acid, azelaic acid, sebacic acid and dodecanedicarboxylic acid; aromatic oxycarboxylic acids, aliphatic dicarboxylic acids, and trihydric or higher carboxylic acids.

Examples of the polyhydric alcohol include aliphatic polyhydric alcohols such as ethylene glycol, propylene glycol, 1,3-propanediol, 2,3-butanediol, 1,4-butanediol, 1,5-pentanediol, 1,6-hexanediol, neopentyl glycol, diethylene glycol, dipropylene glycol, 2,2,4-trimethyl-1,3-pentanediol, polyethylene glycol, polypropylene glycol, polytetramethylene glycol, trimethylolethane, trimethylolpropane, glycerin, pentaerythritol, 1,4-cyclohexanediol, 1,4-cyclohexanedimethanol, spiroglycol, tricyclodecanediol, tricyclodecanedimethanol, m-xylene glycol, o-xylene glycol, 1,4-phenylene glycol, bisphenol A and lactone polyester polyols; alicyclic polyhydric alcohols; and aromatic polyhydric alcohols.

### <Vinyl Polymer>

The vinyl polymer is not particularly limited and may be suitably selected according to the intended purpose. Examples thereof include a polymerized product obtained by a polymerization reaction using any of the following polymerizable monomers as a starting material.

Examples of the polymerizable monomers include resins obtained by polymerizing compounds individually or in combination, which are exemplified by vinyl aromatic hydrocarbons such as styrene, o-methylstyrene, m-methylstyrene, p-methylstyrene, α-methylstyrene, p-ethylstyrene, 2,4-dimethylstyrene, p-tert-butylstyrene, p-chlorostyrene and divinylbenzene; (meth)acrylic acid esters such as methyl acrylate, ethyl acrylate, butyl acrylate, n-propyl acrylate, isopropyl acrylate, n-butyl acrylate, isobutyl acrylate, t-butyl acrylate, n-pentyl acrylate, isopentyl acrylate, neopentyl acrylate, 3-(methyl)butyl acrylate, 2-ethylhexyl acrylate, cyclohexyl acrylate, hexyl acrylate, octyl acrylate, nonyl acrylate, decyl acrylate, undecyl acrylate, dodecyl acrylate, phenyl acrylate, methyl methacrylate, n-propyl methacrylate, isopropyl methacrylate, n-butyl methacrylate, isobutyl methacrylate, t-butyl methacrylate, n-pentyl methacrylate, isopentyl methacrylate, neopentyl methacrylate, 3-(methyl)butyl methacrylate, 2-ethylhexyl methacrylate, hexyl methacrylate, octyl methacrylate, nonyl methacrylate, decyl methacrylate, undecyl methacrylate and dodecyl methacrylate; unsaturated carboxylic acids such as acrylic acid, methacrylic acid, itaconic acid and maleic acid; (meth)acrylamide, nitrogen-substituted maleimides, maleic anhydride, (meth)acrylonitrile, vinyl ketone, vinyl acetate and vinylidene chloride.

### (Colored Polymer Emulsion Particles)

As described above, the black ink contains the colored polymer emulsion particles obtained by dispersing the carbon black coated with the vinyl polymer or the polyester polymer (polymer-coated pigment particles) in water; such colored polymer emulsion particles can be produced by a method of microcapsulation in which pigment particles are covered with a hydrophilic polymer or a method of performing emulsification, etc. to disperse polymer-coated pigment particles into an aqueous medium.

As the method of microcapsulation or emulsification, any conventionally known method may be employed. Examples of the conventionally known method include chemical methods, physical methods, physicochemical methods and mechanical methods. Specific examples thereof include the following methods.
- Acid deposition method: at least part of an anionic group of an anionic group-containing organic polymer compound is neutralized with a basic compound to impart water solubility to the polymer compound; then the polymer compound is kneaded with a color material in an aqueous medium and subsequently neutralized or acidified with an acidic compound so as to deposit an organic compound; and the organic compound is firmly attached to the color material, then neutralized and dispersed.
- Phase-transfer emulsification method: a mixture, which contains a color material and an anionic organic polymer dispersible in water, serves as an organic solvent phase, and water is poured into the organic solvent phase or the organic solvent phase is poured into water.
- Interfacial polymerization method: two types of monomers or two types of reactants are separately dissolved in a dispersion phase and a continuous phase, and the monomers or the reactants are reacted together at the interface between the phases to form a wall film.
- In-situ polymerization method: a liquid or gas monomer and a catalyst, or two reactive substances are supplied from one side of a continuous phase nuclear particle side to effect a reaction and thus to form a wall film.
- Method of curing of film in liquid: in a liquid, droplets of a polymer solution containing core material particles are made insoluble in the liquid by a curing agent or the like so as to form a wall film.
- Coacervation method (Phase separation method): a polymer dispersion liquid with core material particles dispersed therein is divided into a coacervate (thick phase) where the polymer concentration is high and a thin phase so as to form a wall film.
- Method of drying in liquid: a liquid in which a core material is dispersed in a solution of a wall film material is prepared, then the dispersion liquid is poured into a liquid with which a continuous phase of the dispersion liquid is not miscible, such that a composite emulsion is obtained, and subsequently the medium dissolving the wall film material is gradually removed to form a wall film.
- Melting dispersion cooling method: a wall film material which melts into liquid form when heated but solidifies at normal temperature is heated and liquefied, then core material particles are dispersed into the material, and subsequently fine particles are produced and then cooled to form a wall film.
- Method of suspension coating in gas: core material particles of powder are suspended in gas by a fluidized bed and made to float in a gas flow; while doing so, a coating liquid of a wall film material is sprayed and mixed with the particles to form a wall film.
- Spray draying method: a capsulation undiluted liquid is sprayed and brought into contact with hot air to evaporate and dry the volatile content and thus to form a wall film.

Among these methods, what are used especially for ink jetting are the phase-transfer emulsification method, the acid deposition method and the interfacial polymerization method.

The average particle diameter of the dispersion particles (colored polymer emulsion particles) obtained by dispersing the polymer-coated carbon particles in water is not particularly limited and may be suitably selected according to the intended purpose. The average particle diameter of the dispersion particles is preferably in the range of 20 nm to 200 nm, more preferably 30 nm to 150 nm, even more preferably 50 nm to 100 nm. When the average particle diameter of the dispersion particles is greater than 200 nm, thickening/aggregation during storage of the black ink (hereinafter referred to also as "ink" for short) and clogging of nozzles at the time of printing easily arise. When the average particle diameter of the dispersion particles is less than 20 nm, there tend to be a decrease in the image density of printed images and degradation of the storage stability of the ink.

The carbon concentration of the ink is preferably in the range of 1% by mass to 15% by mass, more preferably 2% by mass to 12% by mass, even more preferably 3% by mass to 10% by mass. When the carbon concentration is less than 1% by mass, there is a deficiency of coloring power, which tends to lead to inferiority in terms of image density. When the carbon concentration is greater than 15% by mass, there tends to be a decrease in the storage stability of the ink.

### [Water-soluble Solvent (Wetting Agent)]

The black ink and the color inks (the cyan ink, the magenta ink and the yellow ink), used in the inkjet recording ink set of the present invention, each contain water as a liquid medium; also, the black ink and the color inks each contain a water-soluble solvent besides the water. Note that the water-soluble solvent serves as a wetting agent to prevent each ink from drying, and any of the following water-soluble solvents can be used. The following water-soluble solvents may be used in combination.

Examples of the wetting agent include: polyhydric alcohols such as glycerin, diethylene glycol, 1,3-butanediol, 3-methyl-1,3-butanediol, triethylene glycol, propylene glycol, dipropylene glycol, trimethylolpropane, trimethylolethane, ethylene glycol, diethylene glycol, dipropylene glycol, tripropylene glycol, tetraethylene glycol, hexylene glycol, polyethylene glycol, polypropylene glycol, 1,5-pentanediol, 1,6-hexanediol, glycerol, 1,2,6-hexanetriol, 1,2,4-butanetriol, 1, 2, 3-butanetriol and petriol;
polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether and propylene glycol monoethyl ether; and polyhydric alcohol aryl ethers such as ethylene glycol monophenyl ether and ethylene glycol monobenzyl ether;
nitrogen-containing heterocyclic compounds such as 2-pyrrolidone, N-methyl-2-pyrrolidone, N-hydroxyethyl-2-pyrrolidone, 1,3-dimethylimidazolidinone, ε-caprolactam and γ-butyrolactone;
amides such as formamide, N-methylformamide and N,N-dimethylformamide;
amines such as monoethanolamine, diethanolamine, triethanolamine, monoethylamine, diethylamine and triethylamine;
sulfur-containing compounds such as dimethyl sulfoxide, sulfolane and thiodiethanol; and
propylene carbonate and ethylene carbonate.

Particularly preferable among the water-soluble solvents used as the wetting agents are glycerin, diethylene glycol, triethylene glycol, 1,3-butanediol, 1,6-hexanediol, propylene glycol, 1,5-pentanediol, dipropylene glycol, trimethylolpropane and 3-methyl-1,3-butanediol. These water-soluble solvents are favorable in terms of solubility and make it possible to obtain superior effects of preventing defects in jetting caused by moisture evaporation.

Other preferred examples of wetting agents include those containing sugars. Examples of the sugars include monosaccharides, disaccharides, oligosaccharides (including trisaccharides and tetrasaccharides) and polysaccharides, preferably glucose, mannose, fructose, ribose, xylose, arabinose, galactose, maltose, cellobiose, lactose, sucrose, trehalose and maltotriose. Here, the term "polysaccharides" means sugars in a broad sense, including substances which widely exist in nature, such as α-cyclodextrin and cellulose.

Examples of derivatives of these sugars include reducing sugars (such as sugar alcohols represented by the general formula HOCH₂(CHOH)ₙCH₂OH, where n denotes an integer of 2 to 5), oxidizing sugars (such as aldonic acids and uronic acids), amino acids and thio acids. Among these, sugar alcohols are particularly preferable, with specific examples there of including maltitol and sorbitol.

As described above, in the present invention, use of glycerin, diethylene glycol, triethylene glycol, 1,3-butanediol, 1,6-hexanediol, propylene glycol, 1,5-pentanediol, dipropylene glycol, trimethylolpropane, 3-methyl-1,3-butanediol or the like as the water-soluble solvent (wetting agent) makes it possible to produce an ink superior in storage stability and ejection stability.

The amount of the water-soluble solvent (wetting agent) mixed in each ink is preferably in the range of 30% by mass to 60% by mass, which yields excellent dryability, storage stability and reliability.

### [Penetrant]

A penetrant may be added to each of the black ink and the color inks (the cyan ink, the magenta ink and the yellow ink) used in the inkjet recording ink set of the present invention. Specifically, by adding a penetrant to each ink, the surface tension of each ink decreases and ink droplets quickly permeate into a recoding medium such as paper after attached to the recording medium, so that feathering and color bleeding can be reduced.

As the penetrant, a surfactant or a water-soluble solvent can be used. The appropriate range of the surface tension of each ink in the present invention is the range of 25 mN/m to 45 mN/m at 25°C.

As the water-soluble solvent, use of a C8-C11 polyol such as 2-ethyl-1,3-hexanediol or 2,2,4-trimethyl-1,3-pentanediol is effective.

Since addition of the surfactant to each ink lowers the surface tension thereof, the surfactant can be used as the penetrant. The pigment ink, in particular, has low permeability, and thus addition of the surfactant thereto can effectively supplement permeability.

Examples of the surfactant are broadly divided into nonionic surfactants, anionic surfactants and amphoteric surfactants depending upon the hydrophilic groups contained therein and also broadly divided into silicone-based surfactants and fluorochemical surfactants depending upon the hydrophobic groups contained therein.

Among these, fluorochemical surfactants are particularly useful in the present invention because they greatly lower the surface tension and are highly stable against heat. These surfactants may be used in combination.

Examples of the fluorochemical surfactants include perfluoroalkylsulfonic acid salts, perfluoroalkylcarboxylic acid salts, perfluoroalkylphosphoric acid esters, perfluoroalkyl ethylene oxide adducts, perfluoroalkyl betaines and perfluoroalkyl amine oxide compounds.

Examples of general commercial products of fluorine-based compounds that are easily available and usable in the present invention include SURFLON S-111, S-112, S-113, S121, S131, S132, S-141 and S-145 (manufactured by Asahi Glass Co., Ltd.), FLUORAD FC-93, FC-95, FC-98, FC-129, FC-135, FC-170C, FC-430, FC-431 and FC-4430 (manufactured by Sumitomo 3M Limited), MEGAFAC F-470, F-1405 and F474 (manufactured by Dainippon Ink And Chemicals, Incorporated), ZONYL FS-300, FSN, FSN-100 and FSO (manufactured by DuPont) and EFTOP EF-351, 352, 801 and 802 (manufactured by JEMCO).

A pH adjustor may be added to each of the black ink and the color inks (the cyan ink, the magenta ink and the yellow ink) used in the inkjet recording ink set of the present invention. Specifically, by adding a pH adjustor to each ink so as to keep each ink alkaline, it is possible to stabilize the dispersion state thereof and thus stabilize ejection thereof.

When the inks are greater than or equal to 11 in pH value, they may dissolve an inkjet head and/or an ink supply unit to a great extent, thereby causing problems such as change in ink quality, ink leakage and an ejection defect.

The pH adjustor preferably contains one or more compounds selected from alcoholamines, alkali metal hydroxides, ammonium hydroxides, phosphonium hydroxides and alkali metal carbonates.

Examples of the alcoholamines include diethanolamine, triethanolamine and 2-amino-2-ethyl-1,3-propanediol. Examples of the alkali metal hydroxides include lithium hydroxide, sodium hydroxide and potassium hydroxide. Examples of the ammonium hydroxides include ammonium hydroxide, quaternary ammonium hydroxide and quaternary phosphonium hydroxide. Examples of the alkali metal carbonates include lithium carbonate, sodium carbonate and potassium carbonate.

To each of the black ink and the color inks (the cyan ink, the magenta ink and the yellow ink) used in the inkjet recording ink set of the present invention, additives may if necessary be added as components in a suitably selected manner, for example an antiseptic antimold agent, a chelating reagent, an antirust agent, an antioxidant, an ultraviolet absorber, an oxygen absorber, a light stabilizer and a kogation inhibitor.

Examples of the antiseptic antimold agent include sodium dehydroacetate, sodium sorbate, sodium 2-pyridinethiol-1-oxide, sodium benzoate and sodium pentachlorophenol.

Examples of the chelating reagent include sodium ethylenediaminetetraacetate, sodium nitrilotriacetate, sodium hydroxyethylethylenediaminetriacetate, sodium diethylenetriaminepentaacetate and sodium uramildiacetate.

Examples of the antirust agent include acidic sulfurous acid salts, sodium thiosulfate, antimony thiodiglycolate, diisopropylammonium nitrite, pentaerythritol tetranitrate and dicyclohexylammonium nitrite.

Examples of the antioxidant include phenolic antioxidants (including hindered phenolic antioxidants), amine-based antioxidants, sulfur-based antioxidants and phosphorus-based antioxidants.

Examples of the ultraviolet absorber include benzophenone-based ultraviolet absorbers, benzotriazole-based ultraviolet absorbers, salicylate-based ultraviolet absorbers, cyanoacrylate-based ultraviolet absorbers and nickel complex salt-based ultraviolet absorbers.

A kogation inhibitor may be added to the ink set usable in the present invention.

Here, the term "kogation" refers to a trouble arising in a thermal head which instantaneously heats ink by application of an electrical current to a heater and ejects the ink by utilizing the foaming force of the ink; specifically, the trouble is a phenomenon in which ink components change in quality when the ink is heated, and the ink components having changed in quality are attached to the heater. When the kogation arises, there may be an anomaly in the heating by the heater, so that the ejection force may decrease and, in the worst-case scenario, the ink may not be ejected. Accordingly, to prevent the kogation, a kogation inhibitor may be added to each of the inks usable in the present invention.

Examples of the kogation inhibitor include polyphosphoric acids, polyaminocarboxylic acids, aldonic acids, hydroxycarboxylic acids, polyol phosphoric acid esters, or salt of these acids and esters, amino group-containing acids or salts thereof, and ammonium salts of methyl/methylene group-containing and carboxyl group-containing acids.

The inkjet recording ink set of the present invention can be suitably used in any recording apparatus of inkjet recording type, such as an inkjet recording printer, a facsimile, a copier, a printer-facsimile-copier complex machine, etc.

Also, the inkjet recording ink set has such a superior property that the ink set does not cause adhesion of the inks to an inkjet head of a recording apparatus wherein the inkjet head includes an ink-repellent layer containing a fluorine-based silane coupling agent or an ink-repellent layer containing a silicone resin.

### (Inkjet Recording Method)

An inkjet recording method of the present invention includes an ink flying step and may, if necessary, include suitably selected other steps such as a stimulus generating step and a controlling step.

An inkjet recording apparatus for use in the present invention includes an ink flying unit and may, if necessary, include suitably selected other units such as a stimulus generating unit and a control unit.

### - Ink Flying Step and Ink Flying Unit -

The ink flying step is a step of applying a stimulus to each ink of the above-mentioned inkjet recording ink set of the present invention and flying each ink so as to record an image.

The ink flying unit is a unit configured to apply a stimulus to each ink of the above-mentioned inkjet recording ink set of the present invention and fly each ink so as to record an image. The ink flying unit is not particularly limited, and examples thereof include nozzles for ink ejection.

The stimulus can, for example, be generated by the stimulus generating unit. The stimulus is not particularly limited and may be suitably selected according to the intended purpose, and examples thereof include heat (temperature), pressure, vibration and light. These may be used individually or in combination. Among these, heat and pressure are preferable.

Examples of the stimulus generating unit include a heating device, a pressurizing device, a piezoelectric element, a vibration generating device, an ultrasonic oscillator and a light. More specific examples thereof include a piezoelectric actuator based upon a piezoelectric element, a thermal actuator using an electrothermal conversion element such as a heat element and utilizing a phase change effected by film boiling of liquid, a shape-memory-alloy actuator utilizing a metal phase change effected by a temperature change, and an electrostatic actuator utilizing electrostatic force.

The manner in which the inks are flown is not particularly limited and varies depending upon the type, etc. of the stimulus. In the case where the stimulus is heat, there is, for example, a method in which thermal energy corresponding to a recording signal is given to each ink in a recording head, using a thermal head or the like, air bubbles are generated in each ink by the thermal energy, and each ink is ejected as droplets from a nozzle hole of the recording head by the pressure of the air bubbles. Meanwhile, in the case where the stimulus is pressure, there is, for example, a method in which by applying voltage to a piezoelectric element bonded to a site called a pressure chamber that lies in an ink flow path in a recording head, the piezoelectric element bends, the volume of the pressure chamber decreases, and thus each ink is ejected as droplets from a nozzle hole of the recording head.

Here, an aspect in which the inkjet recording method of the present invention is carried out with an inkjet recording apparatus for use in the present invention is explained referring to the drawings.

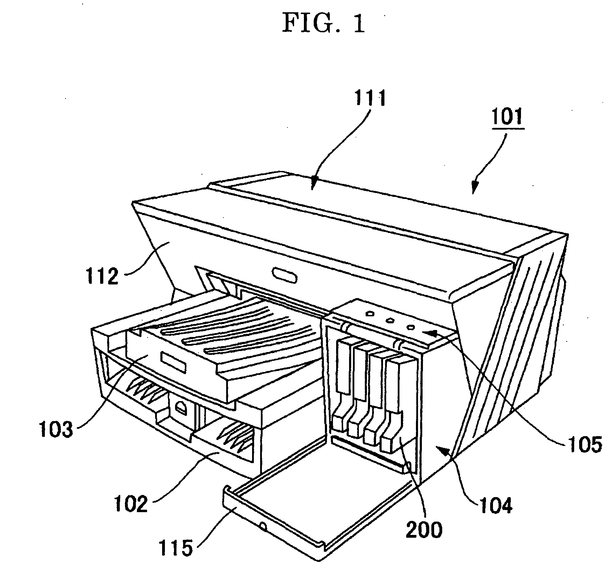

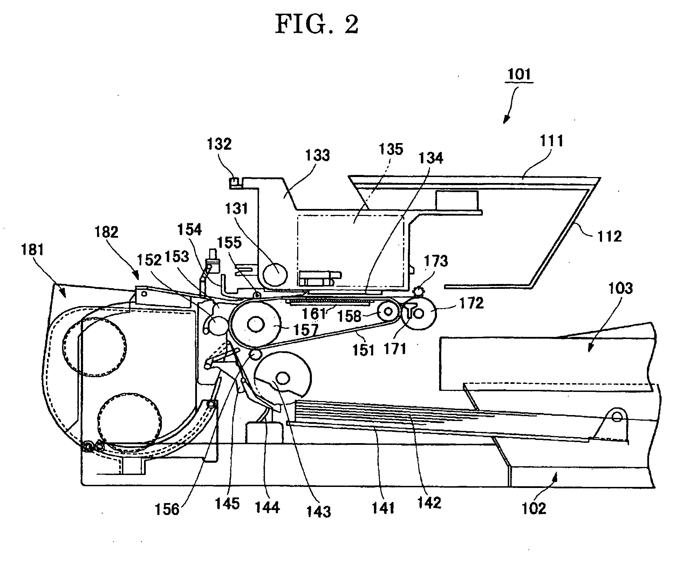

FIG. 1 is an explanatory perspective view showing an inkjet recording apparatus, with a cover of an ink cartridge loading section being left open. FIG. 2 is a schematic structural drawing for explaining the overall structure of the inkjet recording apparatus.

The inkjet recording apparatus shown in FIG. 1 includes an apparatus main body 101, a paper feed tray 102 for loading paper which has been set on the apparatus main body 101, a paper discharge tray 103 for storing paper which has been set on the apparatus main body 101 and on which images have been recorded (formed), and an ink cartridge loading section 104. On the upper surface of the ink cartridge loading section 104 is placed an operation unit 105 which includes operation keys, a display and so forth. The ink cartridge loading section 104 has an openable front cover 115 provided to allow detachment and attachment of an ink cartridge 200. Also in FIG. 1, the reference numeral 111 denotes an upper cover and the reference numeral 112 denotes a front surface of a front cover.

In the apparatus main body 101, as shown in FIG. 2, a carriage 133 is held in a slidable manner with respect to a main scanning direction by a stay 132 and a guide rod 131 serving as a guide member laterally set between left and right side plates (not shown), and the carriage 133 is moved for scanning by a main scanning motor (not shown).

In the carriage 133, a plurality of ink ejection ports of a recording head 134 composed of four inkjet recording heads that eject ink droplets of respective colors, i.e., yellow (Y), cyan (C), magenta (M) and black (K), are aligned in a direction intersecting the main scanning direction such that the ink droplets are ejected in a downward direction.

As the inkjet recording heads constituting the recording head 134, heads provided with a piezoelectric actuator (based upon a piezoelectric element, for example), a thermal actuator (which uses an electrothermal conversion element such as a heat element and utilizes a phase change caused by film boiling of liquid), a shape-memory-alloy actuator (which utilizes a metal phase change effected by a temperature change), an electrostatic actuator (which utilizes electrostatic force), etc. as energy generating units for ink ejection can be used.

Also, in the carriage 133, sub-tanks 135 of each color for supplying the inks of each color to the recording head 134 are installed. Via ink supply tubes (not shown), the inks related to the ink set of the present invention are supplied to the sub-tanks 135 from the ink cartridge 200 loaded into the ink cartridge loading section 104, and the sub-tanks are thus replenished.

As a paper feed unit to feed paper 142 placed over a paper loading section (pressure plate) 141 of the paper feed tray 102, there are provided a half-moon roll (paper feed roll 143) which sends sheets of the paper 142 one by one from the paper loading section 141, and a separation pad 144 which faces the paper feed roll 143 and which is made of a material with a large friction coefficient. This separation pad 144 is biased toward the paper feed roll 143.

As a conveyance unit for conveying the paper 142, fed from this paper feed unit, below the recording head 134, the following are provided: a conveyance belt 151 for conveying the paper 142 by means of electrostatic adsorption; a counter roller 152 for conveying the paper 142 sent from the paper feed unit via a guide 145, such that the paper 142 is sandwiched between the counter roller 152 and the conveyance belt 151; a conveyance guide 153 for changing the conveyance direction of the paper 142, which has been sent upward in a substantially vertical direction, by approximately 90° such that the paper is suitably set on the conveyance belt 151; and an edge pressurizing roll 155 biased toward the conveyance belt 151 by a pressing member 154. In addition, a charging roller 156 as a charging unit for charging the surface of the conveyance belt 151 is provided.

The conveyance belt 151 is an endless belt and can be moved in a circle in the belt conveyance direction, passed in a stretched manner between a conveyance roller 157 and a tension roller 158. For example, the conveyance belt 151 includes a surface layer serving as a paper adsorption surface, formed of a resinous material, such as an ethylene-tetrafluoroethylene copolymer (ETFE), which has a thickness of approximately 40 µm and has not undergone resistance control; and a back layer (an intermediate resistance layer and an earth layer) which is formed of the same material as the surface layer and has undergone resistance control with carbon. On the back of the conveyance belt 151, a guide member 161 is placed correspondingly to a region where printing is performed with the recording head 134. As a paper discharge unit for discharging the paper 142 on which images, etc. have been recorded with the recording head 134, there are provided a separation claw 171 for separating the paper 142 from the conveyance belt 151, a paper discharge roller 172 and a paper discharge roll 173, with the paper discharge tray 103 being placed below the paper discharge roller 172.

A double-sided paper feed unit 181 is detachably mounted on a rear surface portion of the apparatus main body 101. The double-sided paper feed unit 181 takes in the paper 142, returned by rotation of the conveyance belt 151 in the opposite direction, and reverses it, then feeds it between the counter roller 152 and the conveyance belt 151 again. On the upper surface of the double-sided paper feed unit 181 is provided a manual paper feed unit 182.

In this inkjet recording apparatus, the sheets of the paper 142 are fed one by one from the paper feed unit, and the paper 142 fed upward in a substantially vertical direction is guided by the guide 145 and conveyed in such a manner as to be sandwiched between the conveyance belt 151 and the counter roller 152. Further, as an end of the paper is guided by the conveyance guide 153, the paper is pushed against the conveyance belt 151 by the edge pressurizing roll 155, and the conveyance direction of the paper is thus changed by approximately 90°.

On this occasion, the conveyance belt 151 is charged by the charging roller 156, and the paper 142 is electrostatically adsorbed onto the conveyance belt 151 and thusly conveyed. Here, by driving the recording head 134 according to an image signal while moving the carriage 133, ink droplets are ejected onto the paper 142 that is not in motion, so as to perform recording for one line; after the paper 142 is conveyed by a predetermined amount, recording for the next line is performed. On receipt of a recording completion signal or a signal which indicates that the rear end of the paper 142 has reached a recording region, the recording operation finishes, and the paper 142 is discharged onto the paper discharge tray 103.

When it has been detected that there is hardly any ink remaining in the sub-tank(s) 135, necessary amount(s) of ink is/are supplied from the ink cartridge 200 to the sub-tank(s) 135.

In this inkjet recording apparatus, when the ink(s) in the ink cartridge 200 has/have been used up, it is possible to replace only ink bag(s) inside the ink cartridge 200 by dismantling the housing of the ink cartridge 200. Also, even if the ink cartridge 200 is longitudinally placed and employs a front loading structure, stable ink supply is possible. Therefore, even if the apparatus main body 101 is set with little space over it, for example if the apparatus main body 101 is stored in a rack or if an object is placed on the upper surface of the apparatus main body 101, it is possible to replace the ink cartridge 200 with ease.

Note that although the inkjet recording method has been explained with an example wherein it is used with a serial-type (shuttle-type) inkjet recording apparatus in which a carriage performs scanning, the inkjet recording method can also be used with a line-type inkjet recording apparatus provided with a line-type head.

### (Recorded Matter)

A recorded matter of the present invention is a recorded matter recorded by the inkjet recording method of the present invention. The recorded matter of the present invention includes a recording medium, and an image formed on the recording medium using the inks of the inkjet recording ink set of the present invention.

The recording medium is not particularly limited and may be suitably selected according to the intended purpose. Examples thereof include plain paper, glossy paper, special paper, cloth, films and OHP sheets. These may be used individually or in combination.

The recorded matter is of high image quality, free of bleeding and superior in temporal stability, and the recorded matter can be suitably used for a variety of applications, for example as a piece of material with recorded letters/characters or images.

### Examples

The following explains the present invention in further detail, showing Examples and Comparative Examples. It should, however, be noted that the scope of the present invention is not confined to these Examples.

### [Preparation of Inks]

First of all, colored polymer emulsion particles (a carbon black dispersion A and a carbon black dispersion B) were obtained in accordance with the following formulation.

### <Carbon Black Dispersion A>

### (1) Synthesis of Polymer "a"

### - Raw Materials for Polymer "a" -

- Decanoic acid epoxy ester (CARDURA E-10P, manufactured by Japan Epoxy Resins Co., Ltd.) 10.0 parts by mass
- Adipic acid 27.0 parts by mass
- Hexahydrophthalic anhydride 42.0 parts by mass
- Neopentyl glycol 2.0 parts by mass
- Trimethylolpropane 26.0 parts by mass
- Dibutyltin dioxide 0.1 parts by mass

The above-mentioned raw materials were placed in a 2 L four-necked flask equipped with a dewatering pipe, a thermometer, a nitrogen gas introducing pipe and a stirrer. Subsequently, while removing water, the temperature was raised to 180°C in 3 hours so as to effect a dehydration condensation reaction. In this manner, a polymer "a" (polyester resin) was obtained.

### (2) Production of Carbon Black Dispersion A

### - Dispersion Materials -

- Pigment (FW100, carbon black, manufactured by Degussa) 12.0 parts by mass
- Polymer "a" 15.0 parts by mass
- 2-amino-2-methyl-1,3-propanediol 1.0 part by mass
- Ion-exchange water 72.0 parts by mass

A pigment dispersion was produced using the above-mentioned materials. Specifically, the polymer "a" was dissolved in the water with addition of the 2-amino-2-methyl-1,3-propanediol, then the pigment was added; when the mixture exhibited sufficient moistness, it was kneaded at 2,000 rpm for 40 minutes using DYNO-MILL KDL Type-A (manufactured by WAB) as a kneader supplied with zirconia beads having a diameter of 0.5 mm each.

Next, 3 parts by mass of 1 N hydrochloric acid was added to the obtained millbase, which was followed by stirring, then 400 parts by mass of ion-exchange water was added, which was followed by sufficient stirring. Thereafter, the mixture was divided into a pigment paste and water using a centrifuge, and removal of supernatant liquid was repeated several times.

Subsequently, 0.5 parts by mass of 2-amino-2-methyl-1,3-propanediol as a basic compound was added, then the mixture was kneaded using the above-mentioned kneader. Thereafter, the millbase was taken out and filtered using a filter of 1 µm in average pore diameter, and a carbon black dispersion A (hereinafter referred to as "carbon dispersion A" for short) with a pigment concentration of 15% by mass was thus obtained.

### <Carbon Black Dispersion B>

### (1) Synthesis of Polymer "b"

### - Raw Materials 1 for Polymer "b" -

- Styrene 11.2 parts by mass
- Acrylic acid 2.8 parts by mass
- Lauryl methacrylate 12.0 parts by mass
- Polyethyleneglycol methacrylate 4.0 parts by mass
- Styrene macromer (AS-6, manufactured by TOAGOSEI CO., LTD.) 4.0 parts by mass
- Mercaptoethanol 0.4 parts by mass

The atmosphere inside a 1L flask equipped with a mechanical stirrer, a thermometer, a nitrogen gas introducing pipe, a reflux tube and a dripping funnel was adequately replaced by nitrogen gas, then the raw materials 1 were placed in the flask, and the temperature was raised to 65°C.

### - Raw Materials 2 for Polymer "b" -

- Styrene 100.8 parts by mass
- Acrylic acid 25.2 parts by mass
- Lauryl methacrylate 108.0 parts by mass
- Polyethyleneglycol methacrylate 36.0 parts by mass
- Hydroxyethyl methacrylate 60.0 parts by mass
- Styrene macromer (AS-6, manufactured by TOAGOSEI CO., LTD.) 36.0 parts by mass
- Mercaptoethanol 3.6 parts by mass
- Azobisdimethylvaleronitrile 2.4 parts by mass
- Methyl ethyl ketone 18.0 parts by mass

Subsequently, a mixed solution of the raw materials 1 for polymer "b" and the raw materials 2 for polymer "b" was dripped into the flask with the raised temperature in 2.5 hours.

After the dripping had finished, a mixed solution of 0.8 parts by mass of azobisdimethylvaleronitrile and 18.0 parts by mass of methyl ethyl ketone was dripped into the flask in 0.5 hours. The ingredients were aged at 65°C for 1 hour, then 0.8 parts by mass of azobisdimethylvaleronitrile was added, and further, the ingredients were aged for 1 hour.

After the reaction had finished, 364.0 parts by mass of methyl ethyl ketone was poured into the flask, and 800 parts by mass of a polymer "b" (vinyl resin) solution having a concentration of 50% by mass was thus obtained.

A dispersion was produced using the following materials including this polymer "b" solution. First, FW100 (carbon black, manufactured by Degussa) and the polymer "b" solution were sufficiently stirred and then kneaded 20 times using a three roll mill (NR-84A, manufactured by Noritake Co., Limited). The obtained paste was poured into 200 parts by mass of ion-exchange water, which was followed by sufficient stirring. Thereafter, the methyl ethyl ketone and the water were distilled away using an evaporator, and a carbon black dispersion B (hereinafter referred to as "carbon dispersion B" for short) with a pigment concentration of 15% by mass was thus obtained.

### (Example 1)

### <Production of Black Ink 1-K>

- Carbon dispersion A 20.0 parts by mass
- DISPANOL TOC (polyoxyethylenealkylene derivative, solid content: 100% by mass, manufactured by NOF CORPORATION) 0.5 parts by mass
- Lithium hydroxide 0.2 parts by mass
- PROXEL LV (antiseptic antimold agent, manufactured by Avecia) 0.1 parts by mass
- Glycerin 7.0 parts by mass
- 1,3-butanediol 21.0 parts by mass
- 2,2,4-trimethyl-1,3-pentanediol 1.0 part by mass
- Ion-exchange water 50.2 parts by mass

The constituent materials were dissolved in the ion-exchange water in accordance with the above-mentioned formulation, then the obtained solution was filtered using a filter of 1 µm in average pore diameter, and a black ink 1-K for inkjet recording was thus obtained.

### <Production of Cyan Ink 1-C>

- Dye represented by Structural Formula (5) below 2.5 parts by mass
- Lithium hydroxide 0.2 parts by mass
- PROXEL LV (antiseptic antimold agent, manufactured by Avecia) 0.1 parts by mass
- Glycerin 10.0 parts by mass
- 1,3-butanediol 30.0 parts by mass
- 2,2,4-trimethyl-1,3-pentanediol 1.0 part by mass
- Ion-exchange water 56.2 parts by mass

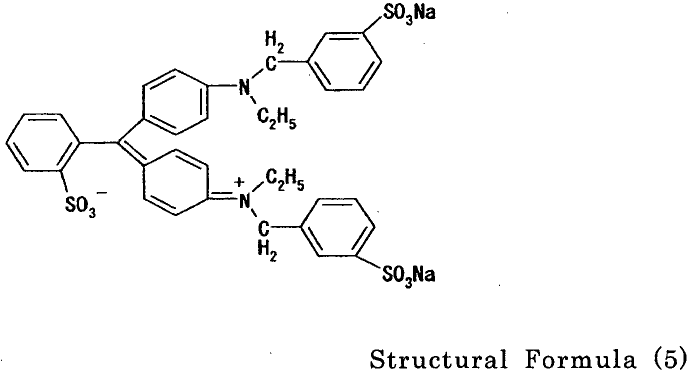

The above-mentioned materials were dissolved in the ion-exchange water and then filtered using a filter of 0.2 µm in average pore diameter, and a cyan ink 1-C for inkjet recording was thus produced. The water-soluble solvents occupied 41.0% by mass of the whole of the cyan ink, and the ratio (S/W) of the amount S of the water-soluble solvents to the amount W of the water was 0.73.

### <Production of Magenta Ink 1-M>

A magenta ink 1-M for inkjet recording was obtained by using the same materials and method as those for the cyan ink 1-C except that the dye represented by Structural Formula (6) below was used instead of the dye for the cyan ink 1-C represented by Structural Formula (5) above. The water-soluble solvents occupied 41.0% by mass of the whole of the magenta ink, and the ratio (S/W) of the amount S of the water-soluble solvents to the amount W of the water was 0.73.

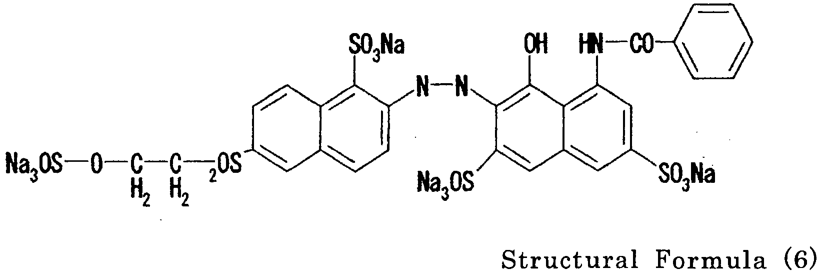

### <Yellow Ink 1-Y>

A yellow ink 1-Y for inkjet recording was obtained by using the same materials and method as those for the cyan ink 1-C except that the dye represented by Structural Formula (7) below was used instead of the dye for the cyan ink 1-C represented by Structural Formula (5) above. The water-soluble solvents occupied 41.0% by mass of the whole of the yellow ink, and the ratio (S/W) of the amount S of the water-soluble solvents to the amount W of the water was 0.73.

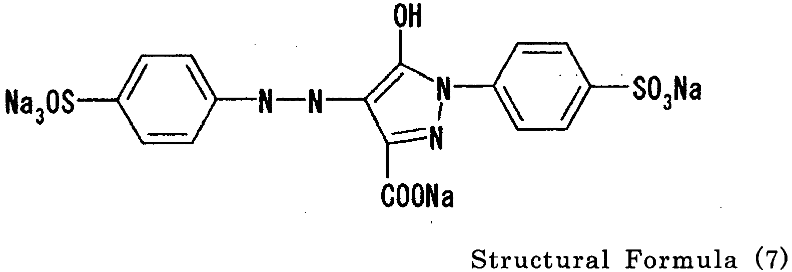

Regarding the inks (1-K, 1-C, 1-M and 1-Y) produced as described above, Tables 1-1 and 1-2 below show main ink components and also show, in relation to each color ink, the amount S of the water-soluble solvents and the ratio (S/W) of the amount S of the water-soluble solvents to the amount W of the water. The meanings of the signs used in Tables 1-1 and 1-2 will be mentioned later.

Next, evaluations concerning the following items (a measurement of a flash point, a measurement of viscosity, a measurement of surface tension, a measurement of ejection stability, and color bleeding) were carried out on each of the inks (1-K, 1-C, 1-M and 1-Y) produced.

### (1) Measurement of Flash Point

The results of measurement of a flash point carried out on the inks (1-K, 1-C, 1-M and 1-Y) produced in Example 1 are shown in Table 2. The measurement was carried out according to the method described in JIS-K2265 based upon the Cleveland open cup method.

### (2) Measurement of Viscosity

The results of measurement of viscosity at 25°C carried out on the inks (1-K, 1-C, 1-M and 1-Y) produced in Example 1 are shown in Table 2. For the measurement of viscosity, a viscometer (RC-500, manufactured by Toki Sangyo Co., Ltd.) was used.

### (3) Measurement of Surface Tension

The results of measurement of surface tension at 25°C carried out on the inks (1-K, 1-C, 1-M and 1-Y) produced in Example 1 are shown in Table 2. For the measurement of surface tension, a surface tensiometer (CBVP-Z, manufactured by Kyowa Interface Science Co., Ltd.) was used.

### (4) Measurement of Ejection Stability

The ink set (1-K, 1-C, 1-M and 1-Y) produced in Example 1 was set in a printer (IPSIO G707, manufactured by Ricoh Company, Ltd.) having the above-mentioned structure shown in FIGS. 1 and 2, and an evaluation of ejection stability was carried out according to the following method.

Using the printer with a nozzle plate set therein, printing was continuously carried out for 10 minutes; subsequently, with the inks attached to a head surface, a humidity retention cap was set, then the printer was left unattended for 1 month at 50°C and 60 RH%; thereafter, cleaning was carried out such that the printer was brought into a state similar to the state it was in before left unattended. After that, a test of intermittent printing was carried out under the following conditions, and the ejection stability of the inks was evaluated.

A pattern chart for which the inks of all four colors were used, with the ink of each color occupying 5% in area, was continuously printed onto 20 sheets of paper, then a pause when printing was not carried out for 20 minutes was introduced; the foregoing was repeated 50 times, and the pattern chart was thus printed onto a total of 1,000 sheets of paper, then the pattern chart for which the inks of all four colors were used, with the ink of each color occupying 5% in area, was printed onto one more sheet of paper; this sheet was visually evaluated, in accordance with the following evaluation criteria, for the presence or absence of streaks, white spots (formed because of lack of the inks) and nonuniform parts (formed by disturbed ink jetting) in solid portions. Regarding the printed pattern, a chart with the printing area of each color occupying 5% of the whole area of the sheet was printed with the inks at 100% duty. As for printing conditions, a recording density of 300 dpi and one-pass printing were employed. The evaluation criteria are as follows. Note that the ranks AA and A can be accepted. The results are shown in Table 2.

### [Evaluation Criteria]

AA: No streaks, no white spots (formed because of lack of the inks) and no nonuniform parts (formed by disturbed ink jetting) were observed in the solid portions, and no variation in density was observed.
   A: No streaks, no white spots and no nonuniform parts were observed in the solid portions.
   B: Streaks, white spots and/or nonuniform parts were slightly observed in the solid portions.
   C: Streaks, white spots and/or nonuniform parts were observed in the entire solid portions.

An evaluation concerning color bleeding was carried out in the following manner on the inks (1-K, 1-C, 1-M and 1-Y) produced as described above.

### (5) Color Bleeding

Using the printer supplied with the ink set (1-K, 1-C, 1-M and 1-Y) produced in Example 1, printing was carried out onto testing paper (MY PAPER, manufactured by Ricoh Company, Ltd.) with a pattern composed of color solid images of magenta, cyan, yellow, red (mixture of magenta and yellow on a recording medium) and green (mixture of cyan and yellow on a recording medium) and letters of the black ink. As for printing conditions, 100% duty, a recording density of 300 dpi and one-pass printing were employed. A visual evaluation was carried out, in accordance with the evaluation criteria, concerning color bleeding (running) in the solid images of the color inks and the solid images of red and green (which were each formed by mixing the color inks on a recording medium) and between the letters of the black ink. The results are shown in Table 3. Note that the ranks AA and A can be accepted in the present invention.

### [Evaluation Criteria]

AA: Color bleeding did not arise, and the outlines of the black letters were clear.
   A: Color bleeding did not arise, and the black letters were clearly recognizable.
   B: Color bleeding slightly arose, and the black letters ran to some extent.
   C: Color bleeding arose, and the black letters were difficult to recognize.

### (Examples 2 to 4)

Inks of Examples 2 to 4 were produced in the same manner as in Example 1 except that the main ink components were changed and (in relation to each color ink) the amount S of the water-soluble solvents and the ratio (S/W) of the amount S of the water-soluble solvents to the amount W of the water were changed, as shown in Tables 1-1 and 1-2 below. The meanings of the signs used in Tables 1-1 and 1-2 will be mentioned later.

Evaluations (concerning a measurement of a flash point, a measurement of viscosity, a measurement of surface tension, a measurement of ejection stability, and color bleeding) were carried out, as in Example 1, on each of the inks produced in Examples 2 to 4. The results are shown in Table 2. Also, as in Example 1, a visual evaluation was carried out concerning color bleeding (running). The results are shown in Table 3.

### (Comparative Example 1)

### <Carbon Black Dispersion C>

- Pigment (FW100, carbon black, manufactured by Degussa) 15.0 parts by mass
- JONCRYL 819 (styrene-acrylic polymer dispersant, manufactured by BASF Japan Ltd.) 5.0 parts by mass
- Ion-exchange water 80.0 parts by mass

The polymer dispersant was added to the water and dissolved, then the pigment was mixed into the obtained solution with stirring; when the mixture exhibited sufficient moistness, it was kneaded at 2,000 rpm for 60 minutes using DYNO-MILL KDL Type-A (manufactured by WAB) as a kneader supplied with zirconia beads having a diameter of 0.5 mm each. Subsequently, the millbase was taken out and filtered using a filter of 1 µm in average pore diameter, and a carbon black dispersion C (hereinafter referred to as "carbon dispersion C" for short) with a pigment concentration of 15% by mass was thus obtained.

### <Black Ink 5-K>

A black ink of Comparative Example 1, named "black ink 5-K", was produced in the same manner as in Example 2 except that the carbon dispersion C obtained by using the polymer dispersant and dispersing the pigment in accordance with the above-mentioned method was used instead of the carbon dispersion A in the black ink 2-K of Example 2.

Regarding Comparative Example 1, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

Evaluations (concerning a measurement of a flash point, a measurement of viscosity, a measurement of surface tension, a measurement of ejection stability, and color bleeding) were carried out, as in Example 1, on the inks of Comparative Example 1, i.e., the black ink 5-K produced and the same color inks (2-C, 2-M and 2-Y) as in Example 2. The results are shown in Table 2. Also, as in Example 1, a visual evaluation was carried out concerning color bleeding (running). The results are shown in Table 3.

### (Comparative Example 2)

### <Carbon Black Dispersion D>

Three hundred grams of a pigment (FW100, carbon black, manufactured by Degussa) was sufficiently mixed with 1,000 g of water, then 450 g of sodium hypochlorite (effective chlorine concentration: 12 mol%) was added dropwise, and stirring was carried out at 100°C to 105°C for 8 hours.

Subsequently, 100 g of sodium hypochlorite (effective chlorine concentration: 12 mol%) was further added to the obtained liquid, which was followed by dispersion for 2 hours at 2,000 rpm with DYNO-MILL KDL Type-A (manufactured by WAB) supplied with zirconia beads having a diameter of 0.5 mm each.

Subsequently, the obtained slurry was diluted tenfold with water, subjected to pH adjustment with lithium hydroxide, and then desalted and concentrated with an ultrafilter such that the conductivity became 0.2 mS/cm.

Further, coarse particles were removed by centrifugation, then the obtained matter was filtered using a filter of 1 µm in average pore diameter, and a carbon black dispersion D (hereinafter referred to as "carbon dispersion D" for short) with a pigment concentration of 15% by mass was thus obtained.

### <Black Ink 6-K>

A black ink of Comparative Example 2, named "black ink 6-K", was produced in the same manner as in Example 2 except that the carbon dispersion D obtained by carrying out the surface hydrophilizing treatment in accordance with the above-mentioned method was used instead of the carbon dispersion A in the black ink 2-K of Example 2.

Regarding Comparative Example 2, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

Evaluations (concerning a measurement of a flash point, a measurement of viscosity, a measurement of surface tension, a measurement of ejection stability, and color bleeding) were carried out, as in Example 1, on the inks of Comparative Example 2, i.e., the black ink 6-K produced and the same color inks (2-C, 2-M and 2-Y) as in Example 2. The results are shown in Table 2. Also, as in Example 1, a visual evaluation was carried out concerning color bleeding (running). The results are shown in Table 3.

### (Comparative Example 3)

A black ink of Comparative Example 3, named "black ink 7K", was produced in the same manner as in Example 2 except that 5.0 parts by mass of the dye shown in Table 1-3 (compound represented by Structural Formula (8) below) was used instead of the carbon dispersion A (20.0 parts by mass) in the black ink 2-K of Example 2 and that the amount of the ion-exchange water was changed from 40.7 parts by mass to 55.7 parts by mass.

Regarding Comparative Example 3, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

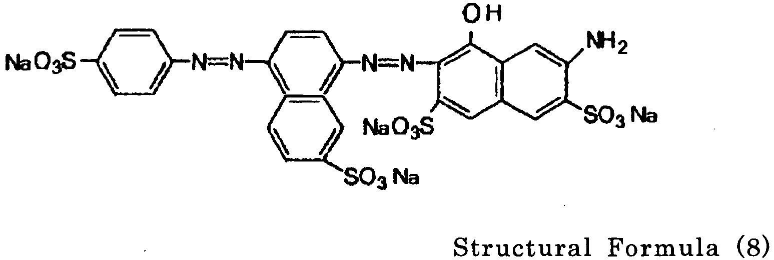

Evaluations (concerning a measurement of a flash point, a measurement of viscosity, a measurement of surface tension, a measurement of ejection stability, and color bleeding) were carried out, as in Example 1, on the inks of Comparative Example 3, i.e., the black ink 7-K produced and the same color inks (2-C, 2-M and 2-Y) as in Example 2. The results are shown in Table 2. Also, as in Example 1, a visual evaluation was carried out concerning color bleeding (running). The results are shown in Table 3.

### (Comparative Example 4)

A black ink of Comparative Example 4, named "black ink 8-K", was produced by removing the surfactant DISPANOL TOC from the composition of the black ink 1-K of Example 1 and increasing the amount of the ion-exchange water to 50.7 parts by mass.

Regarding Comparative Example 4, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

Evaluations (concerning a measurement of a flash point, a measurement of viscosity, a measurement of surface tension, a measurement of ejection stability, and color bleeding) were carried out, as in Example 1, on the inks of Comparative Example 4, i.e., the black ink 8-K produced and the same color inks (1-C, 1-M and 1-Y) as in Example 1. The results are shown in Table 2. Also, as in Example 1, a visual evaluation was carried out concerning color bleeding (running). The results are shown in Table 3.

### (Comparative Example 5)

Color inks of Comparative Example 5, named "8-C, 8-M and 8Y", were produced by changing the compositions of the color inks 1-C, 1-M and 1-Y of Example 1 to the compositions shown in Tables 1-3 and 1-4 below, reducing the amount of the water-soluble solvent for each color ink to 37.0% by mass and increasing the amount of the ion-exchange water for each color ink as shown in Table 1-4.

Regarding Comparative Example 5, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

Evaluations (concerning a measurement of a flash point, a measurement of viscosity, a measurement of surface tension, a measurement of ejection stability, and color bleeding) were carried out, as in Example 1, on the inks of Comparative Example 5, i.e., the color inks 8-C, 8-M and 8-Y produced and the same black ink (1-K) as in Example 1. The results are shown in Table 2. Also, as in Example 1, a visual evaluation was carried out concerning color bleeding (running). The results are shown in Table 3.

### (Comparative Example 6)

Color inks of Comparative Example 6, named "9-C, 9-M and 9Y", were produced by changing the compositions of the color inks 3-C, 3-M and 3-Y of Example 3 to the compositions shown in Tables 1-3 and 1-4, increasing the amount of the water-soluble solvent for each color ink to 63.5% by mass and reducing the amount of the ion-exchange water for each color ink as shown in Table 1-4.

Regarding Comparative Example 6, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

Evaluations (concerning a measurement of a flash point, a measurement of viscosity, a measurement of surface tension, a measurement of ejection stability, and color bleeding) were carried out, as in Example 1, on the inks of Comparative Example 6, i.e., the color inks 9-C, 9-M and 9-Y produced and the same black ink (3-K) as in Example 3. The results are shown in Table 2. Also, as in Example 1, a visual evaluation was carried out concerning color bleeding (running). The results are shown in Table 3.

### (Comparative Example 7)

Color inks of Comparative Example 7, named "10-C, 10-M and 10Y", were produced in the same manner as in Example 4 except that ethylene glycol monobutyl ether was used as a water-soluble solvent instead of the 1,3-butanediol for each of the color inks 4-C, 4-M and 4-Y.

Regarding Comparative Example 7, Tables 1-3 and 1-4 below show main ink components and also show, in relation to each color ink, the amount S of the water-soluble solvents and the ratio (S/W) of the amount S of the water-soluble solvents to the amount W of the water. The meanings of the signs used in Tables 1-3 and 1-4 will be mentioned later.

Evaluations (concerning a measurement of a flash point, a measurement of viscosity, a measurement of surface tension, a measurement of ejection stability, and color bleeding) were carried out, as in Example 1, on the inks of Comparative Example 7, i.e., the color inks 10-C, 10-M and 10-Y produced and the same black ink (4-K) as in Example 4. The results are shown in Table 2. Also, as in Example 1, a visual evaluation was carried out concerning color bleeding (running). The results are shown in Table 3.

**Table 1-1**

| | Ink | Color material [Structure] | Color material dispersion | Water-soluble solvent | | | | | | |
|---|---|---|---|---|---|---|---|---|---|---|
| | | | | GLY | MBD | 13BD | 2P | EGMBE | 224TM13PD | 2E13HD |
| Ex. 1 | 1-K | Carbon dispersion A | 20.0% | 7.0% | | 21.0% | | | 1.0% | |
| | 1-C | Dye [Formula 5] | 2.5% | 10.0% | | 30.0% | | | 1.0% | |
| | 1-M | Dye [Formula 6] | 2.5% | 10.0% | | 30.0% | | | 1.0% | |
| | 1-Y | Dye [Formula 7] | 2.5% | 10.0% | | 30.0% | | | 1.0% | |
| Ex.2 | 2-K | Carbon dispersion A | 20.0% | 12.0% | 12.0% | 12.0% | 0.5% | | 2.0% | |
| | 2-C | Dye [Formula 4-1] | 2.5% | 18.0% | 18.0% | 18.0% | 0.5% | | 2.0% | |
| | 2-M | Dye [Formula 3-1] | 2.5% | 18.0% | 18.0% | 18.0% | 0.5% | | 2.0% | |
| | 2-Y | Dye [Formula 1-1] | 2.0% | 18.0% | 18.0% | 18.0% | 0.5% | | 2.0% | |
| Ex. 3 | 3-K | Carbon dispersion B | 20.0% | 15.0% | 30.0% | | 1.5% | | | 2.0% |
| | 3-C | Dye [Formula 4-2] | 2.5% | 14.0% | 42.0% | | 1.5% | | | 2.0% |
| | 3-M | Dye [Formula 3-1] | 2.5% | 14.0% | 42.0% | | 1.5% | | | 2.0% |
| | 3-Y | Dye [Formula 2-1] | 2.0% | 14.0% | 42.0% | | 1.5% | | | 2.0% |
| Ex. 4 | 4-K | Carbon dispersion B | 20.0% | 10.0% | | 30.0% | | | | 2.0% |
| | 4-C | Dye [Formula 4-1] | 2.5% | 12.5% | | 37.5% | | | | 2.0% |
| | 4-M | Dye [Formula 3-2] | 2.0% | 12.5% | | 37.5% | | | | 2.0% |
| | 4-Y | Dye [Formula 1-1] | 1.4% | 12.5% | | 37.5% | | | | 2.0% |
| | | Dye [Formula 2-1] | 0.7% | | | | | | | |

**Table 1-2**

| | Ink | Surfactant | | | pH adjustment | | | Antiseptic antimold agent | Amount W of ion-exchange water | Amount S of water-soluble solvents | S/W |
|---|---|---|---|---|---|---|---|---|---|---|---|
| | | TOC | FS-300 | [Formula 17] | LiOH | TEA | AEPD | LV | | | |
| Ex. 1 | 1-K | 0.5% | | | 0.2% | | | 0.1% | 50.2% | | |
| | 1-C | | | | 0.2% | | | 0.1% | 56.2% | 41.0% | 0.73 |
| | 1-M | | | | 0.2% | | | 0.1% | 56.2% | 41.0% | 0.73 |
| | 1-Y | | | | 0.2% | | | 0.1% | 56.2% | 41.0% | 0.73 |
| Ex. 2 | 2-K | | 0.5% | | | 0.2% | | 0.1% | 40.7% | | |
| | 2-C | | | | | 0.2% | | 0.1% | 40.7% | 56.5% | 1.39 |
| | 2-M | | | | | 0.2% | | 0.1% | 40.7% | 56.5% | 1.39 |
| | 2-Y | | | | | 0.2% | | 0.1% | 41.2% | 56.5% | 1.37 |
| Ex. 3 | 3-K | | 0.1% | | | | 0.5% | 0.1% | 30.8% | | |
| | 3-C | | | | | | 0.2% | 0.1% | 37.7% | 59.5% | 1.58 |
| | 3-M | | | | | | 0.2% | 0.1% | 37.7% | 59.5% | 1.58 |
| | 3-Y | | | | | | 0.2% | 0.1% | 38.2% | 59.5% | 1.56 |
| Ex. 4 | 4-K | | | 0.2% | | | 0.5% | 0.1% | 37.2% | | |
| | 4-C | | | | | | 0.2% | 0.1% | 45.2% | 52.0% | 1.15 |
| | 4-M | | | | | | 0.2% | 0.1% | 45.7% | 52.0% | 1.14 |
| | 4-Y | | | | | | 0.2% | 0.1% | 45.6% | 52.0% | 1.14 |

**Table 1-3**

| | InK | Color material [Structure] | Color material dispersion | Water-soluble solvent | | | | | | |
|---|---|---|---|---|---|---|---|---|---|---|
| | | | | GLY | MBD | 13BD | 2P | EGMBE | 224TM13PD | 2E13HD |
| Comp. Ex. 1 | 5-K | Carbon dispersion C | 20.0% | 12.0% | 12.0% | 12.0% | 0.5% | | 2.0% | |
| | 2-C | Dye [Formula 4-1] | 2.5% | 18.0% | 18.0% | 18.0% | 0.5% | | 2.0% | |
| | 2-M | Dye [Formula 3-1] | 2.5% | 18.0% | 18.0% | 18.0% | 0.5% | | 2.0% | |
| | 2-Y | Dye [Formula 1-1] | 2.0% | 18.0% | 18.0% | 18.0% | 0.5% | | 2.0% | |
| Comp. Ex. 2 | 6-K | Carbon dispersion D | 20.0% | 12.0% | 12.0% | 12.0% | 0.5% | | 2.0% | |
| | 2-C | Dye [Formula 4-1] | 2.5% | 18.0% | 18.0% | 18.0% | 0.5% | | 2.0% | |
| | 2-M | Dye [Formula 3-1] | 2.5% | 18.0% | 18.0% | 18.0% | 0.5% | | 2.0% | |
| | 2-Y | Dye [Formula 1-1] | 2.0% | 18.0% | 18.0% | 18.0% | 0.5% | | 2.0% | |
| Comp. Ex. 3 | 7-K | Dye [Formula 8] | 5.0% | 12.0% | 12.0% | 12.0% | 0.5% | | 2.0% | |
| | 2-C | Dye [Formula 4-1] | 2.5% | 18.0% | 18.0% | 18.0% | 0.5% | | 2.0% | |
| | 2-M | Dye [Formula 3-1] | 2.5% | 18.0% | 18.0% | 18.0% | 0.5% | | 2.0% | |
| | 2-Y | Dye [Formula 1-1] | 2.0% | 18.0% | 18.0% | 18.0% | 0.5% | | 2.0% | |
| Comp. Ex. 4 | 8-K | Carbon dispersion A | 20.0% | 7.0% | | 21.0% | | | 1.0% | |
| | 1-C | Dye [Formula 5] | 2.5% | 10.0% | | 30.0% | | | 1.0% | |
| | 1-M | Dye [Formula 6] | 2.5% | 10.0% | | 30.0% | | | 1.0% | |
| | 1-Y | Dye [Formula 7] | 2.5% | 10.0% | | 30.0% | | | 1.0% | |
| Comp. Ex. 5 | 1-K | Carbon dispersion A | 20.0% | 7.0% | | 21.0% | | | 1.0% | |
| | 8-C | Dye [Formula 5] | 3.0% | 9.0% | | 27.0% | | | 1.0% | |
| | 8-M | Dye [Formula 6] | 2.5% | 9.0% | | 27.0% | | | 1.0% | |
| | 8-Y | Dye [Formula 7] | 2.5% | 9.0% | | 27.0% | | | 1.0% | |
| Comp. Ex. 6 | 3-K | Carbon dispersion B | 20.0% | 15.0% | 30.0% | | 1.5% | | | 2.0% |
| | 9-C | Dye [Formula 4-2] | 3.0% | 15.0% | 45.0% | | 1.5% | | | 2.0% |
| | 9-M | Dye [Formula 3-1] | 2.0% | 15.0% | 45.0% | | 1.5% | | | 2.0% |
| | 9-Y | Dye [Formula 2-1] | 2.0% | 15.0% | 45.0% | | 1.5% | | | 2.0% |
| Comp. Ex. 7 | 4-K | Carbon dispersion B | 20.0% | 10.0% | | 30.0% | | | | 2.0% |
| | 10-C | Dye (Formula 4-1] | 2.5% | 12.5% | | | | 37.5% | | 2.0% |
| | 10-M | Dye [Formula 3-2] | 2.0% | 12.5% | | | | 37.5% | | 2.0% |
| | 10-Y | Dye [Formula 1-1] | 1.4% | 12.5% | | | | 37.5% | | 2.0% |
| | | Dye [Formula 2-1] | 0.7% | | | | | | | |

**Table 1-4**

| | Ink | Surfactant | | | pH adjustment | | | Antiseptic antimold agent | Amount W of ion-exchange water | Amount S of water-soluble solvents | S/W |
|---|---|---|---|---|---|---|---|---|---|---|---|
| | | TOC | FS-300 | [Formula 17] | LiOH | TEA | AEPD | LV | | | |
| Comp. Ex. 1 | 5-K | | 0.5% | | | 0.2% | | 0.1% | 40.7% | | |
| | 2-C | | | | | 0.2% | | 0.1% | 40.7% | 56.5% | 1.39 |
| | 2-M | | | | | 0.2% | | 0.1% | 40.7% | 56.5% | 1.39 |
| | 2-Y | | | | | 0.2% | | 0.1% | 41.2% | 56.5% | 1.37 |
| Comp. Ex. 2 | 6-K | | 0.5% | | | 0.2% | | 0.1% | 40.7% | | |
| | 2-C | | | | | 0.2% | | 0.1% | 40.7% | 56.5% | 1.39 |
| | 2-M | | | | | 0.2% | | 0.1% | 40.7% | 56.5% | 1.39 |
| | 2-Y | | | | | 0.2% | | 0.1% | 41.2% | 56.5% | 1.37 |
| Comp. Ex. 3 | 7-K | | 0.5% | | | 0.2% | | 0.1% | 55.7% | | |
| | 2-C | | | | | 0.2% | | 0.1% | 40.7% | 56.5% | 1.39 |
| | 2-M | | | | | 0.2% | | 0.1% | 40.7% | 56.5% | 1.39 |
| | 2-Y | | | | | 0.2% | | 0.1% | 41.2% | 56.5% | 1.37 |
| Comp. Ex. 4 | 8-K | 0.0% | | | 0.2% | | | 0.1% | 50.7% | | |
| | 1-C | | | | 0.2% | | | 0.1% | 56.2% | 41.0% | 0.73 |
| | 1-M | | | | 0.2% | | | 0.1% | 56.2% | 41.0% | 0.73 |
| | 1-Y | | | | 0.2% | | | 0.1% | 56.2% | 41.0% | 0.73 |
| Comp. Ex. 5 | 1-K | 0.5% | | | 0.2% | | | 0.1% | 50.2% | | |
| | 8-C | | | | 0.2% | | | 0.1% | 59.7% | 37.0% | 0.62 |
| | 8-M | | | | 0.2% | | | 0.1% | 60.2% | 37.0% | 0.61 |
| | 8-Y | | | | 0.2% | | | 0.1% | 60.2% | 37.0% | 0.61 |
| Comp. Ex. 6 | 3-K | | 0.1% | | | | 0.5% | 0.1% | 30.8% | | |
| | 9-C | | | | | | 0.2% | 0.1% | 33.2% | 63.5% | 1.91 |
| | 9-M | | | | | | 0.2% | 0.1% | 34.2% | 63.5% | 1.86 |
| | 9-Y | | | | | | 0.2% | 0.1% | 34.2% | 63.5% | 1.86 |
| Comp. Ex. 7 | 4-K | | | 0.2% | | | 0.5% | 0.1% | 37.2% | | |
| | 10-C | | | | | | 0.2% | 0.1% | 45.2% | 52.0% | 1.15 |
| | 10-M | | | | | | 0.2% | 0.1% | 45.7% | 52.0% | 1.14 |
| | 10-Y | | | | | | 0.2% | 0.1% | 45.6% | 52.0% | 1.14 |

Each empty space in Tables 1-1 to 1-4 means that there is none.

The meanings of the signs used in Tables 1-1 to 1-4 are as follows.
GLY: glycerin
MBD: 3-methyl-1,3-butanediol
13BD: 1,3-butanediol
2P: 2-pyrrolidone
EGMBE: ethylene glycol monobutyl ether
224TM13PD: 2,2,4-trimethyl-1,3-pentanediol
2E13HD: 2-ethyl-1,3-hexanediol
TOC: DISPANOL TOC (polyoxyethylenealkylene derivative, solid content: 100% by mass, manufactured by NOF CORPORATION)
FS-300: ZONYL FS-300 (polyoxyalkylene (C2-C3) -2-perfluoroalkyl (C4-C16) ethyl ether, solid content: 40% by mass, manufactured by DuPont)
LiOH: lithium hydroxide
TEA: triethanolamine
AEPD: 2-amino-2-ethyl-1,3-propanediol
LV: PROXEL LV (antiseptic antimold agent, manufactured by Avecia)

"Formula 17" shown with brackets in Tables 1-2 and 1-4 denotes the following chemical formula:

[C₄F₉-CH₂CH(OH)CH₂O-(CH₂CH₂O)₂₃-CH₂CH(OH)CH₂-C₄F₉]

The structures of the color materials ("Formula 5", "Formula 6" and "Formula 7" shown with brackets) in Tables 1-1 and 1-3 respectively denote Structural Formulae (5), (6) and (7) written above.

The structures of the color materials ("Formula 1-1", "Formula 2-1", "Formula 3-1", "Formula 3-2", "Formula 4-1" and "Formula 4-2" shown with brackets) in Tables 1-1 and 1-3 respectively denote Structural Formulae (1-1), (2-1), (3-1), (3-2), (4-1) and (4-2) below.

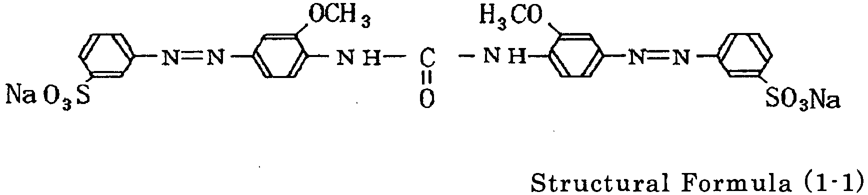

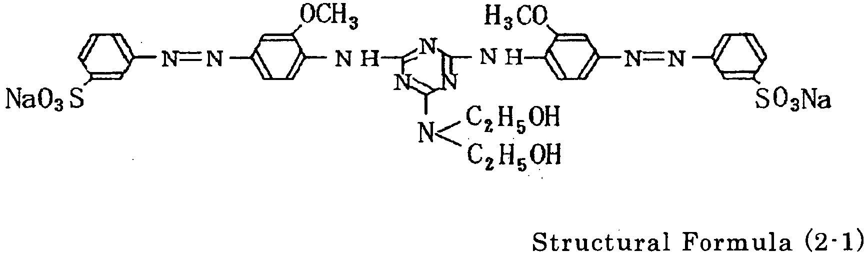

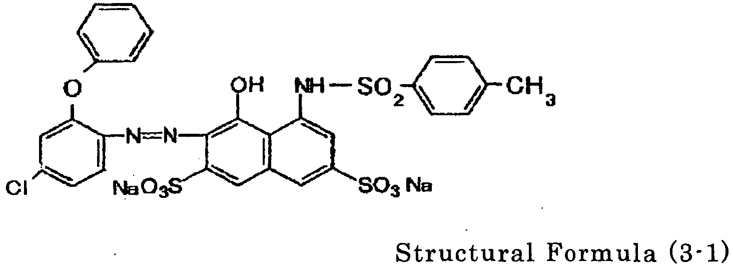

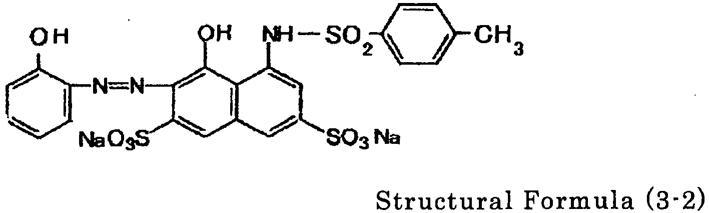

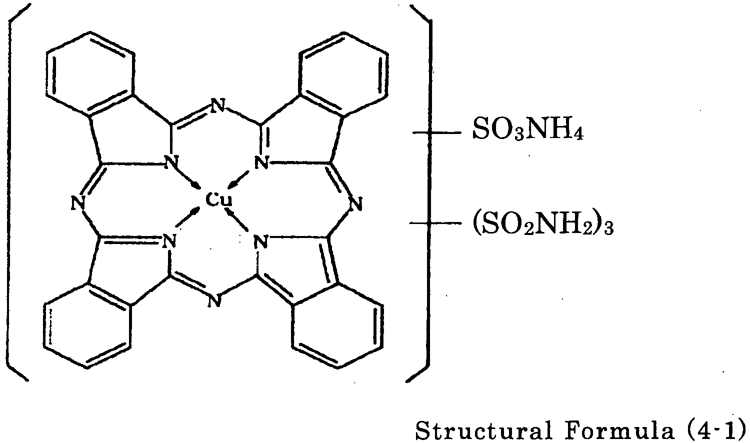

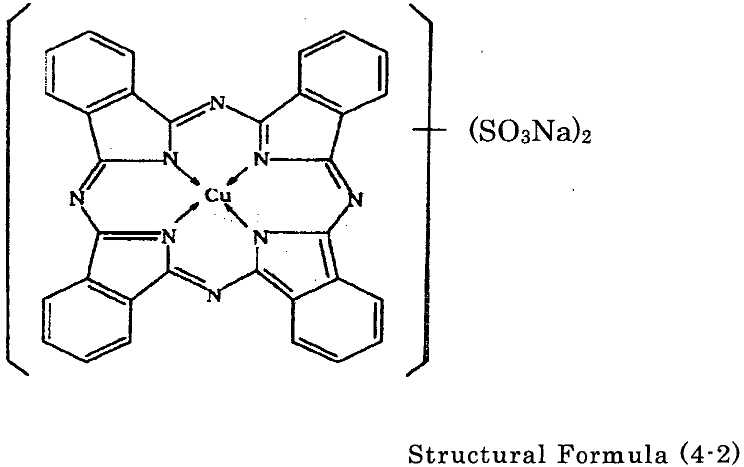

**Table 2**

| | Ink | Flash point (°C) | Viscosity (mPa·s) | Surface tension (mN/m) | Ejection stability |
|---|---|---|---|---|---|
| Ex. 1 | 1-K | | 4.8 | 30.2 | A |
| | 1-C | None | 5.1 | 34.9 | A |
| | 1-M | None | 5.3 | 34.8 | A |
| | 1-Y | None | 5.5 | 34.8 | A |
| Ex. 2 | 2-K | | 12.0 | 24.6 | A |
| | 2-C | None | 12.9 | 39.2 | AA |
| | 2-M | None | 12.5 | 40.1 | AA |
| | 2-Y | None | 12.4 | 39.5 | AA |
| Ex-3 | 3-K | | 20.5 | 28.9 | A |
| | 3-C | None | 15.1 | 39.9 | A |
| | 3-M | None | 15.2 | 39.8 | A |
| | 3-Y | None | 14.8 | 40.2 | A |
| Ex-4 | 4-K | | 8.0 | 20.9 | AA |
| | 4-C | None | 8.2 | 38.6 | AA |
| | 4-M | None | 8.0 | 38.5 | AA |
| | 4-Y | None | 8.4 | 39.1 | AA |
| Comp. Ex. 1 | 5-K | | 12.5 | 24.9 | B |
| | 2-C | Refer to Ex. 2 | | | |
| | 2-M | | | | |
| | 2-Y | | | | |
| Comp. Ex. 2 | 6-K | | 11.6 | 24.8 | A |
| | 2-C | Refer to Ex. 2 | | | |
| | 2-M | | | | |
| | 2-Y | | | | |
| Comp. Ex. 3 | 7-K | | 12.1 | 25.0 | A |
| | 2-C | Refer to Ex. 2 | | | |
| | 2-M | | | | |
| | 2-Y | | | | |
| Comp. Ex. 4 | 8-K | | 4.6 | 34.6 | A |
| | 1-C | Refer to Ex. 1 | | | |
| | 1-M | | | | |
| | 1-Y | | | | |
| Comp. Ex. 5 | 1-K | | Refer to Ex. 1 | | |
| | 8-C | None | 4.5 | 34.1 | A |
| | 8-M | None | 4.3 | 34.4 | A |
| | 8-Y | None | 4.6 | 34.5 | A |
| Comp. Ex. 6 | 3-K | | Refer to Ex. 3 | | |
| | 9-C | 95°C | 19.8 | 40.8 | B |
| | 9-M | 95°C | 18.6 | 40.2 | B |
| | 9-Y | 95°C | 19.3 | 40.6 | B |
| Comp. Ex. 7 | 4-K | | Refer to Ex. 4 | | |
| | 10-C | 90°C | 7.6 | 39.2 | A |
| | 10-M | 92°C | 7.7 | 38.8 | A |
| | 10-Y | 92°C | 7.9 | 39.3 | A |

**Table 3**

| | Bleeding | | | | |
|---|---|---|---|---|---|
| | Black/Yellow | Black/Magenta | Black/Cyan | Black/Red | Black/Green |
| Ex. 1 | A | A | A | A | A |
| Ex. 2 | AA | AA | AA | A | AA |
| Ex. 3 | A | AA | AA | A | A |
| Ex. 4 | AA | AA | AA | AA | AA |
| Comp. Ex. 1 | B | A | A | B | A |
| Comp. Ex. 2 | B | A | A | A | B |
| Comp. Ex. 3 | C | C | B | C | C |
| Comp. Ex. 4 | B | A | A | C | C |
| Comp. Ex. 5 | B | B | A | B | A |
| Comp. Ex. 6 | A | A | A | A | B |
| Comp. Ex. 7 | B | B | A | C | C |

The results show that when any of the black inks of Examples 1 to 4 (each containing the water-soluble solvents, the surfactant, the water, and the colored polymer emulsion particles obtained by dispersing, in water, the carbon black coated with the vinyl polymer or the polyester polymer) and any of the color inks, i.e., the cyan, magenta and yellow inks, of Examples 1 to 4 (each containing the color dye, the water-soluble solvents and the water, wherein the amount S of the water-soluble solvents contained in each color ink occupied 40% by mass or more of the total amount of each color ink, the ratio (S/W) of the amount S of the water-soluble solvents to the amount W of the water contained in each color ink was in the range of 0.7 to 1.6, and each ink did not have a flash point) were used, bleeding did not arise and the black letters were clearly recognizable. In addition, favorable ejection stability was secured, and no streaks, no white spots (formed because of lack of the inks) and no nonuniform parts (formed by disturbed ink jetting) were observed in the solid portions.

Meanwhile, in Comparative Example 1 (wherein the resin was simply used as a dispersant in the carbon dispersion of the black ink), Comparative Example 2 (wherein sodium hypochlorite was added to the carbon dispersion of the black ink), Comparative Example 3 (wherein the dye was used as the color material of the black ink), Comparative Example 4 (wherein no surfactant was added to the carbon dispersion of the black ink), Comparative Example 5 (wherein the amount S of the water-soluble solvents contained in each color ink was 37%, and the ratio (S/W) of the amount S of the water-soluble solvents to the amount W of the water contained in each color ink was 0.62 or 0.61), Comparative Example 6 (wherein the ratio (S/W) of the amount S of the water-soluble solvents contained in each color ink to the amount W of the water contained in each color ink was 1.91 or 1.86, and each color ink had a flash point of 95°C) and Comparative Example 7 (wherein each color ink had a flash point of 90°C or 92°C), bleeding arose, which was not acceptable. Also, the black ink (5-K) of Comparative Example 1, the black ink (3-K) of Comparative Example 6 and the color inks of Comparative Example 6 were inferior in ejection stability, with streaks, white spots and/or nonuniform parts being observed in the solid portions.

An inkjet recording ink set of the present invention prevents bleeding between a black ink and color inks and has high ejection reliability and superior image quality. Therefore, by an inkjet recording method wherein image formation is performed with this ink set installed in an inkjet recording apparatus (e.g., an inkjet recording printer, a facsimile, a copier or a printer-facsimile-copier complex machine), it is possible to obtain a high-quality recorded matter provided both with capability of forming vivid color, which is derived from the color inks, and with high image density derived from the black ink.

### Reference Signs List

- 101: apparatus main body
- 102: paper feed tray
- 103: paper discharge tray
- 104: ink cartridge loading section
- 105: operation unit
- 111: upper cover
- 112: front surface of front cover
- 115: openable front cover
- 131: guide rod
- 132: stay
- 133: carriage
- 134: recording head
- 135: sub-tank
- 141: paper loading section
- 142: paper
- 143: paper feed roll
- 144: separation pad
- 145: guide
- 151: conveyance belt
- 152: counter roller
- 153: conveyance guide
- 154: pressing member
- 155: edge pressurizing roll
- 156: charging roller
- 157: conveyance roller
- 158: tension roller
- 161: guide member
- 171: separation claw
- 172: paper discharge roller
- 173: paper discharge roll
- 181: double-sided paper feed unit
- 182: manual paper feed unit
- 200: ink cartridge

## Claims

1. An inkjet recording ink set comprising:
a black ink; and
color inks composed of a cyan ink, a magenta ink and a yellow ink,
wherein the black ink contains at least a water-soluble solvent, a surfactant, water, and colored polymer emulsion particles obtained by dispersing, in water, carbon black coated with a vinyl polymer or a polyester polymer,
wherein the cyan ink, the magenta ink and the yellow ink each contain at least a corresponding color dye, a water-soluble solvent, and water, and
wherein an amount S of the water-soluble solvent contained in each color ink occupies 40% by mass or more of a total amount of each color ink, a ratio of the amount S of the water-soluble solvent to an amount W of the water contained in each color ink, represented by S/W, is in the range of 0.7 to 1.6, and each color ink does not have a flash point in a measurement according to JIS-K2265 based upon the Cleveland open cup method.

2. The inkjet recording ink set according to claim 1, wherein the cyan ink, the magenta ink and the yellow ink each have a viscosity of 5 mPa·s to 20 mPa·s at 25°C and a static surface tension of 35 mN/m to 45 mN/m at 25°C, and
wherein the black ink has a viscosity of 5 mPa·s to 20 mPa·s at 25°C and a static surface tension of 20 mN/m to 30 mN/m at 25°C.

3. The inkjet recording ink set according to claim 1 or 2, wherein the color dye contained in the yellow ink is a compound represented by General Formula (1) or (2) below, 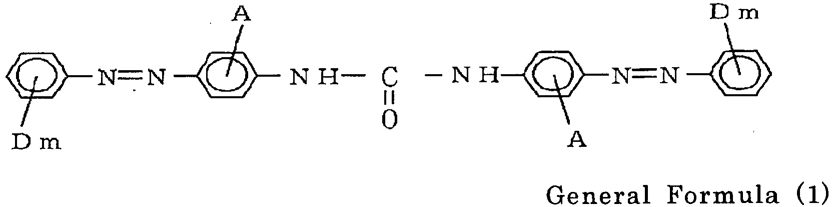 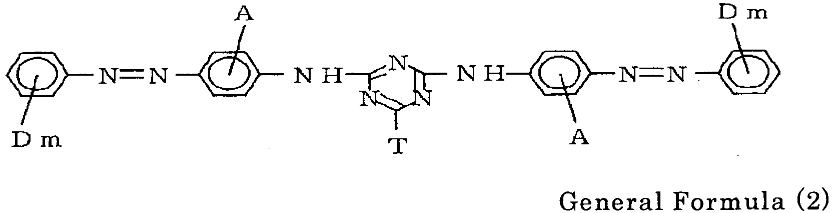 where A denotes at least one selected from the group consisting of a hydrogen atom, a C1-C2 alkyl group and a C1-C2 alkoxy group; T denotes a C1-C3 alkanolamino group or a hydroxyl group; D denotes -COOM or -SO₃M, with M denoting an alkali metal, a quaternary ammonium, a quaternary phosphonium or a C1-C3 alkanolamine; and m denotes 0, 1, 2 or 3.

4. The inkjet recording ink set according to any one of claims 1 to 3, wherein the color dye contained in the magenta ink is a compound represented by General Formula (3) below, 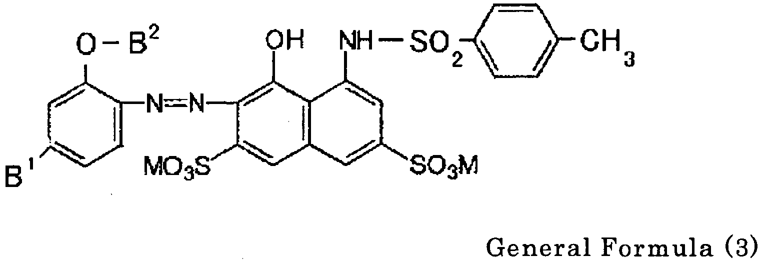 where B¹ and B² each denote at least one selected from the group consisting of a hydrogen atom, a phenyl group, a fluorine atom, a halogen atom and a hydroxyl group; M denotes an alkali metal, a quaternary ammonium, a quaternary phosphonium or a C1-C3 alkanolamine.

5. The inkjet recording ink set according to any one of claims 1 to 4, wherein the color dye contained in the cyan ink is a compound represented by General Formula (4) below, 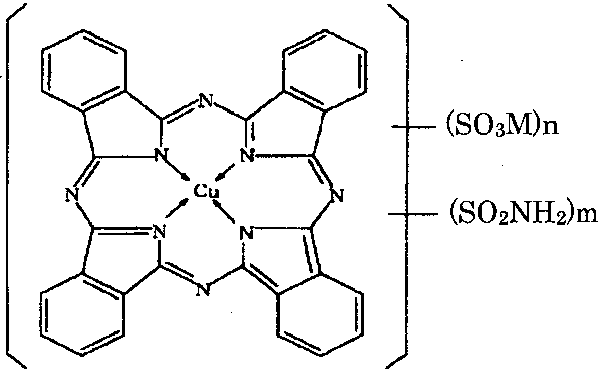 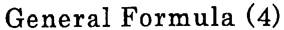 where M denotes an alkali metal, a quaternary ammonium, a quaternary phosphonium or an alkanolamine; m denotes 0, 1, 2 or 3; and n denotes 1, 2, 3 or 4.

6. An inkjet recording method comprising:
applying a stimulus to each ink of the inkjet recording ink set according to any one of claims 1 to 5 and flying each ink so as to record an image.

7. A recorded matter comprising:
a recording medium; and
an image formed on the recording medium, using the inks of the inkjet recording ink set according to any one of claims 1 to 5.

## Patentansprüche

1. Satz von Tintenstrahlaufzeichnungstinten umfassend:
eine schwarze Tinte; und
farbige Tinten, die aus einer cyanfarbenen Tinte, einer magentafarbenen Tinte und einer gelben Tinte bestehen,
wobei die schwarze Tinte mindestens ein wasserlösliches Lösungsmittel, ein Tensid, Wasser und farbige Polymeremulsionsteilchen enthält, die durch Dispergieren, in Wasser, von mit einem Vinylpolymer oder einem Polyesterpolymer beschichtetem Ruß erhalten werden,
wobei die cyanfarbene Tinte, die magentafarbene Tinte und die gelbe Tinte jeweils mindestens einen entsprechenden farbigen Farbstoff, ein wasserlösliches Lösungsmittel und Wasser enthalten und
wobei eine Menge S des wasserlöslichen Lösungsmittels, das in jeder farbigen Tinte enthalten ist, 40 Masse-% oder mehr einer Gesamtmenge jeder farbigen Tinte einnimmt, ein Verhältnis der Menge S des wasserlöslichen Lösungsmittels zu einer Menge W des in jeder farbigen Tinte enthaltenen Wassers, durch S/W dargestellt, im Bereich von 0,7 bis 1,6 liegt und jede farbige Tinte keinen Flammpunkt bei einer Messbestimmung JIS-K2265 auf der Basis des Verfahrens des offenen Tiegels nach Cleveland entsprechend aufweist.

2. Satz von Tintenstrahlaufzeichnungstinten nach Anspruch 1, wobei die cyanfarbene Tinte, die magentafarbene Tinte und die gelbe Tinte jeweils eine Viskosität von 5 mPa·s bis 20 mPa·s bei 25 °C und eine statische Oberflächenspannung von 35 mN/m bis 45 mN/m bei 25 °C aufweisen und
wobei die schwarze Tinte eine Viskosität von 5 mPa·s bis 20 mPa·s bei 25 °C und eine statische Oberflächenspannung von 20 mN/m bis 30 mN/m bei 25 °C aufweist.

3. Satz von Tintenstrahlaufzeichnungstinten nach Anspruch 1 oder 2, wobei der farbige Farbstoff, der in der gelben Tinte enthalten ist, eine Verbindung ist, die durch die allgemeine Formel (1) oder (2) unten dargestellt ist 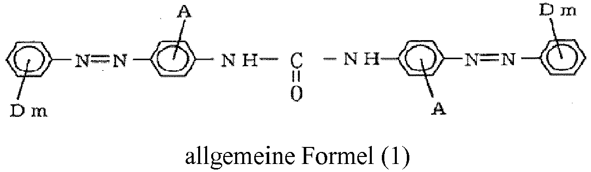 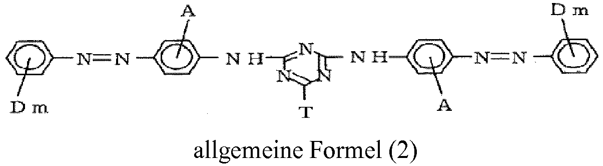 wobei A mindestens eines bedeutet ausgewählt aus der Gruppe bestehend aus einem Wasserstoffatom, einer C1-C2-Alkylgruppe und einer C1-C2-Alkoxygruppe; T eine C1-C3-Alkanolaminogruppe oder eine Hydroxylgruppe bedeutet; D -COOM oder - SO₃M bedeutet, wobei M ein Alkalimetall, ein quartäres Ammonium, ein quartäres Phosphonium oder ein C1-C3-Alkanolamin bedeutet; und m 0,1, 2 oder 3 bedeutet.

4. Satz von Tintenstrahlaufzeichnungstinten nach einem der Ansprüche 1 bis 3, wobei der farbige Farbstoff, der in der magentafarbenen Tinte enthalten ist, eine Verbindung ist, die durch die allgemeine Formel (3) unten dargestellt ist 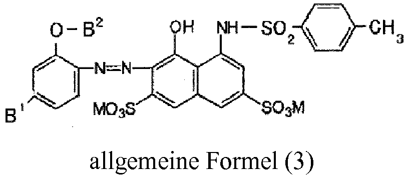 wobei B¹ und B² jeweils mindestens eines bedeuten ausgewählt aus der Gruppe bestehend aus einem Wasserstoffatom, einer Phenylgruppe, einem Fluoratom, einem Halogenatom und einer Hydroxylgruppe; M ein Alkalimetall, ein quartäres Ammonium, ein quartäres Phosphonium oder ein C1-C3-Alkanolamin bedeutet.

5. Satz von Tintenstrahlaufzeichnungstinten nach einem der Ansprüche 1 bis 4, wobei der farbige Farbstoff, der in der cyanfarbenen Tinte enthalten ist, eine Verbindung ist, die durch die allgemeine Formel (4) unten dargestellt ist 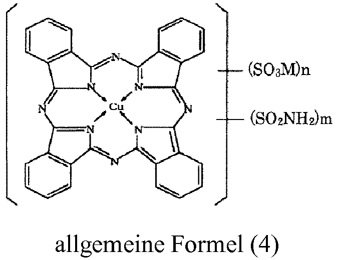 wobei M ein Alkalimetall, ein quartäres Ammonium, ein quartäres Phosphonium oder ein Alkanolamin bedeutet; m 0, 1, 2 oder 3 bedeutet; und n 1, 2, 3 oder 4 bedeutet.

6. Tintenstrahlaufzeichnungsverfahren umfassend:
das Aufbringen einer Anregung auf jede Tinte des Satzes von Tintenstrahlaufzeichnungstinten nach einem der Ansprüche 1 bis 5 und Fließenlassen jeder Tinte, um ein Bild aufzuzeichnen.

7. Aufgezeichnete Substanz umfassend:
ein Aufzeichnungsmedium; und
ein Bild, das auf dem Aufzeichnungsmedium unter Anwendung der Tinten des Satzes von Tintenstrahlaufzeichnungstinten nach einem der Ansprüche 1 bis 5 gebildet wird.

## Revendications

1. Ensemble d'encres d'enregistrement par jet d'encre comprenant:
une encre noire; et
des encres colorées composées d'une encre cyan, d'une encre magenta et d'une encre jaune,
où l'encre noire contient au moins un solvant soluble dans l'eau, un tensioactif, de l'eau, et des particules colorées d'émulsion polymère obtenue par dispersion, dans de l'eau, de noir de carbone enrobé d'un polymère de vinyle ou d'un polymère de polyester,
où l'encre cyan, l'encre magenta et l'encre jaune contiennent chacune au moins une teinture colorée correspondante, un solvant soluble dans l'eau, et de l'eau, et
où une quantité S du solvant soluble dans l'eau contenu dans chaque encre colorée occupe 40 % en masse ou plus d'une quantité totale de chaque encre colorée, un rapport de la quantité S du solvant soluble dans l'eau à une quantité W de l'eau contenue dans chaque encre colorée, représenté par S/W, se situe dans la plage de 0,7 à 1,6, et chaque encre colorée ne présente pas de point de vaporisation dans une mesure effectuée selon la norme JIS K2265 basée sur le procédé Cleveland en vase ouvert.

2. Ensemble d'encres d'enregistrement par jet d'encre selon la revendication 1, où l'encre cyan, l'encre magenta et l'encre jaune ont chacune une viscosité de 5 mPa·s à 20 mPa·s à 25°C et une tension superficielle statique de 35 mN/m à 45 mN/m à 25°C, et
où l'encre noire présente une viscosité de 5 mPa·s à 20 mPa·s à 25°C et une tension superficielle statique de 20 mN/m à 30 mN/m à 25°C.

3. Ensemble d'encres d'enregistrement par jet d'encre selon la revendication 1 ou 2, où la teinture colorée contenue dans l'encre jaune est un composé représenté par la Formule générale (1) ou (2) ci-dessous, 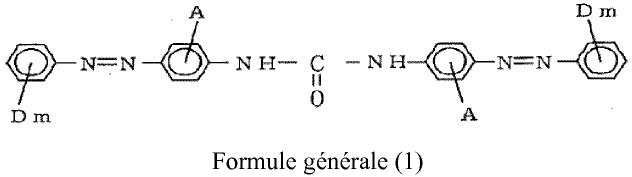 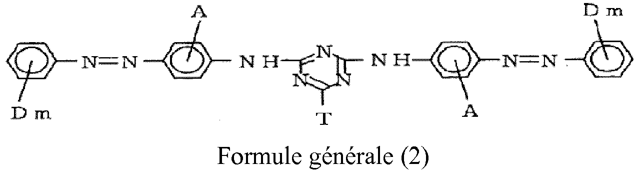 où A indique au moins l'un sélectionné dans le groupe constitué d'un atome d'hydrogène, d'un groupe alkyle en C₁ à C₂ et d'un groupe alcoxy en C₁ à C₂; T indique un groupe alcanolamino en C₁ à C₃ ou un groupe hydroxyle; D indique -COOM ou - SO₃M, avec M indiquant un métal alcalin, un ammonium quaternaire, un phosphonium quaternaire ou une alcanolamine en C₁ à C₃ et m indique 0, 1, 2 ou 3.

4. Ensemble d'encres d'enregistrement par jet d'encre selon l'une quelconque des revendications 1 à 3, où la teinture colorée contenue dans l'encre magenta est un composé représenté par la Formule générale (3) ci-dessous, 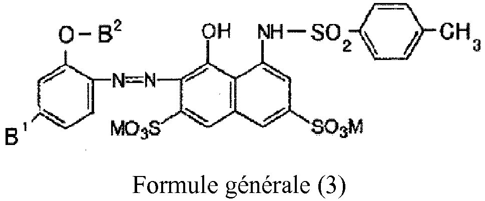 où B¹ et B² indiquent chacun au moins l'un sélectionné parmi le groupe constitué d'un atome d'hydrogène, d'un groupe phényle, d'un atome de fluor, d'un atome d'halogène et d'un groupe hydroxyle; M indique un métal alcalin, un ammonium quaternaire, un phosphonium quaternaire ou une alcanolamine en C₁ à C₃.

5. Ensemble d'encres d'enregistrement par jet d'encre selon l'une quelconque des revendications 1 à 4, où la teinture colorée contenue dans l'encre cyan est un composé représenté par la Formule générale (4) ci-dessous, 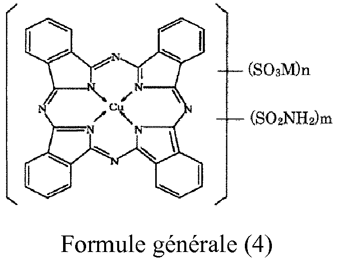 où M indique un métal alcalin, un ammonium quaternaire, un phosphonium quaternaire ou une alcanolamine; m indique 0, 1, 2 ou 3; et n indique 1, 2, 3 ou 4.

6. Procédé d'enregistrement par jet d'encre comprenant:
l'application d'un stimulus à chaque encre de l'ensemble d'encres d'enregistrement par jet d'encre selon l'une quelconque des revendications 1 à 5 et le jet de chaque encre afin d'enregistrer une image.

7. Matière enregistrée comprenant:
un milieu d'enregistrement; et
une image formée sur le milieu d'enregistrement, utilisant les encres de l'ensemble d'encres d'enregistrement par jet d'encre selon l'une quelconque des revendications 1 à 5.
